# EUROPÄISCHE PATENTSCHRIFT

(11) **EP 2 495 479 B1**
(45) Veröffentlichungstag und Bekanntmachung des Hinweises auf die Patenterteilung: **16.04.2014**
(21) Anmeldenummer: 11001730.8
(22) Anmeldetag: 02.03.2011
(51) Int. Cl.: F16K 11/074, F16K 11/078

(54) **Einhebelmischarmatur mit wählbarem logischem Einstellbereich**
Single lever mix fitting with selectable logical adjustment range
Mitigeur monocommande doté d'une zone de réglage sélective logique

(43) Veröffentlichungstag der Anmeldung: 05.09.2012
(73) Patentinhaber: KWC AG, 5726 Unterkulm (CH)
(72) Erfinder: Brunner, Stefan, 5054 Moosleerau (CH); Lehner, Michael, 5722 Gränichen (CH)
(74) Vertreter: Schaad, Balass, Menzl & Partner AG

(56) Entgegenhaltungen:
- EP-A1- 0 060 481
- EP-A2- 2 107 282
- US-A1- 2002 148 516

## Beschreibung

Die vorliegende Erfindung betrifft eine Einhebelmischarmatur gemäss Patentanspruch 1 sowie eine Mischerpatrone gemäss Patentanspruch 12.

Eine Einhebelmischarmatur und eine Mischerpatrone sind bekannt aus der EP 2,107,282 A2. In dieser Druckschrift ist der Aufbau der Mischerpatrone, deren Funktionsweise und bevorzugte Verwendung beschrieben. Die Mischerpatrone weist eine Warmwasserzuflussöffnung, eine Kaltwasserzuflussöffnung und eine erste und eine zweite Mischwasserabflussöffnung auf. Das der Mischerpatrone zugeführte Warm- und Kaltwasser wird in der Mischerpatrone gemischt. Je nach Stellung des Stellhebels, in einem ersten Einstellbereich oder in einem zweiten Einstellbereich, wird dieses Mischwasser entweder der ersten oder der zweiten Mischwasserabflussöffnung zugeführt. Die erste Mischwasserabflussöffnung ist vorzugsweise mit einem Auslauf zum Füllen einer Badewanne strömungsverbunden. Die zweite Mischwasserabflussöffnung ist vorzugsweise mit einer Duschbrause strömungsverbunden. Wenn der Stellhebel, ausgehend von einer Ruhestellung, in Richtung des ersten Einstellbereichs bewegt wird, tritt Mischwasser aus der ersten Mischwasserabflussöffnung aus, fliesst in den Auslauf, der zum Füllen der Badewanne verwendet wird, und tritt dort aus. Die Temperatur und der Durchfluss des austretenden Mischwassers sind in diesem ersten Einstellbereich, durch Drehen des Stellhebels um eine Drehachse und Verschwenken des Stellhebels um eine zur Drehachse rechtwinklig verlaufende Schwenkachse, einstellbar. Wenn der Stellhebel, ausgehend von der Ruhestellung, in entgegengesetzter Richtung bezüglich des ersten Einstellbereichs, in den zweiten Einstellbereich bewegt wird, tritt Mischwasser aus der zweiten Mischwasserabflussöffnung aus, fliesst in die Duschbrause und tritt dort aus. Die Temperatur des austretenden Mischwassers ist in diesem zweiten Einstellbereich frei wählbar, jedoch ist der Durchfluss konstant.

Eine Einhebelmischarmatur mit einer Mischerpatrone mit einer ersten und einer zweiten Mischwasserabflussöffnung sowie einer Kaltwasserzuflussöffnung und einer Warmwasserzuflussöffnung ist in der älteren Patentanmeldung mit der Nummer EP 10 014 489.9 offenbart (Druckschrift EP 2 453 152). Es ist eine Einhebelmischarmatur beschrieben, bei der das von der Mischerpatrone abfliessende Mischwasser einerseits, beim Drehen des Bedienhebels ausgehend von einer Ruhestellung in einem ersten Einstellbereich, direkt in den Wasserauslauf fliesst und andererseits, beim Drehen des Bedienhebels ausgehend von der Ruhestellung - in entgegengesetzter Richtung - in einem zweiten Einstellbereich, über einen Durchlauferhitzer in den Wasserauslauf fliesst. Im Durchlauferhitzer wird das Wasser erwärmt. Dadurch ist es möglich, die Temperatur des Warmwassers in der Wasserversorgung vergleichsweise tief zu halten und bei Bedarf das Wasser über den Durchlauferhitzer umzuleiten, dort zu erwärmen und somit eine höhere Wassertemperatur des aus dem Wasserauslauf austretenden Wassers bereitzustellen.

Konstruktionsbedingt muss bei der, in der oben erwähnten Patentanmeldung offenbarten Einhebelmischarmatur der Bedienhebel in die Ruhestellung zurückgedreht werden, um in den zweiten Einstellbereich zu gelangen. Wenn also ein Benutzer eine wärmere Wassertemperatur als die Temperatur des Warmwassers aus der Wasserversorgung einstellen will, muss der Bedienhebel, ausgehend vom ersten Einstellbereich in entgegengesetzter Richtung zurück in die Ruhestellung und anschliessend in den zweiten Einstellbereich gedreht werden.

Ausgehend von diesem Hintergrund liegt der vorliegenden Erfindung die Aufgabe zugrunde, eine Einhebelmischarmatur zur Verfügung zu stellen, die es erlaubt, einerseits ein Sanitärsystem eines Gebäudes an eine Wasserversorgung anzuschliessen, die eine niedrigere Wasserhöchsttemperatur (beispielsweise von ca. 42°C) als üblich zur Verfügung stellt, es dennoch ermöglicht, falls nötig, auf einfache Art und Weise eine höhere Wassertemperatur des austretenden Wassers einzustellen und andererseits eine logische und ergonomische Bedienung ermöglicht.

Diese Aufgabe wird mit einer Einhebelmischarmatur gemäss dem Anspruch 1 und mit einer Mischerpatrone gemäss Anspruch 12 gelöst.

Die Einhebelmischarmatur weist ein Armaturengehäuse und eine in das Armaturengehäuse eingesetzte, mittels eines Bedienhebels steuerbare Mischerpatrone auf. Die Mischerpatrone hat eine Warmwasserzuflussöffnung, an die eine Warmwasserleitung - als Zuleitung - anschliessbar ist, eine Kaltwasserzuflussöffnung, an die eine Kaltwasserleitung - als Zuleitung - anschliessbar ist, eine, mit einem Wasserauslauf strömungsverbundene, erste Mischwasserabflussöffnung und eine zweite Mischwasserabflussöffnung. Durch Drehen des Bedienhebels um eine Drehachse, ausgehend von einer Ruhestellung in Richtung eines ersten Einstellbereichs, fliesst - im ersten Einstellbereich - zuerst Kaltwasser, anschliessend Mischwasser und schlussendlich Warmwasser aus der ersten Mischwasserabflussöffnung in den Wasserauslauf und tritt dort aus; die Mischerpatrone verbindet dabei, je nach Drehlage des Bedienhebels, die Kaltwasserzuflussöffnung und/oder die Warmwasserzuflussöffnung mit der ersten Mischwasserabflussöffnung. Dabei tritt durch die zweite Mischwasserabflussöffnung kein Mischwasser aus. Durch weiteres Drehen des Bedienhebels um die Drehachse in gleicher Richtung, ausgehend vom ersten Einstellbereich, in einem zweiten Einstellbereich, fliesst - im ersten Einstellbereich - Mischwasser aus der zweiten Mischwasserabflussöffnung aus, wobei die zweite Mischwasserabflussöffnung mit einem Einlass eines Durchlauferhitzers sowie ein Auslass des Durchlauferhitzers mit dem Wasserauslauf strömungsverbunden ist; die Mischerpatrone verbindet, je nach Drehlage des Bedienhebels, die Kaltwasser- und Warmwasserzuflussöffnungen oder nur die Warmwasserzuflussöffnung mit der zweiten Mischwasserabflussöffnung. Dabei tritt durch die erste Mischwasserabflussöffnung kein Mischwasser aus. Das Mischwasser wird, ausgehend von der zweiten Mischwasserabflussöffnung, im Durchlauferhitzer erwärmt.

Dieser erfindungsgemässe Aufbau der Einhebelmischarmatur erlaubt es, beim Drehen des Bedienhebels im ersten Einstellbereich und anschliessend im zweiten Einstellbereich, die Temperatur des Kaltwassers, Mischwasser und des Warm- beziehungsweise Heisswassers (aus dem Durchlauferhitzer) wie aus der Anmeldung EP 10 014 489.9 bekannt einzustellen. Dabei entspricht die Höchsttemperatur des austretenden Mischwassers im ersten Einstellbereich der Temperatur des Warmwassers in der Warmwasserversorgung. Die niedrigste Wassertemperatur im ersten Einstellbereich entspricht der Wassertemperatur des Kaltwassers in der Kaltwasserversorgung. Wenn eine wärmere Wassertemperatur als diejenige des Warmwassers in der Wasserversorgung eingestellt werden soll, wird der Bedienhebel einfach - in gleicher Drehrichtung - weitergedreht in den zweiten Einstellbereich hinein, wobei dann das Wasser über die zweite Mischwasserabflussöffnung in den Einlass des Durchlauferhitzers fliesst, dort weiter erwärmt wird und anschliessend durch den Wasserauslauf als Heisswasser austritt.

Die erfindungsgemässe Einhebelmischarmatur erlaubt es also, eine Wasserversorgung mit einer niedrigeren Warmwasserhöchsttemperatur (beispielsweise ca. 42°C) als üblich bereitzustellen. Gleichzeitig besteht die Möglichkeit dieses Wasser, je nach Bedarf, auf eine höhere Wassertemperatur (beispielsweise von ungefähr 52°C) zu erwärmen. Weiter ist die Einhebelmischarmatur logisch bedienbar. Logisch bedienbar bedeutet, dass die Wassertemperatur des austretenden Wassers zuerst kalt, anschliessend warm und schlussendlich - in gleicher Drehrichtung - in dem zweiten Einstellbereich warm bis heiss ist.

Im zweiten Einstellbereich beträgt die einstellbare maximale Wasserhöchsttemperatur vorzugsweise ungefähr 52°C, und die minimale Wassertemperatur vorzugsweise ungefähr 35°C bis 42°C. Dazwischen kann die Wassertemperatur im zweiten Einstellbereich frei gewählt werden. Der Bereich der Wassertemperatur des aus dem Wasserauslauf austretenden Wassers im ersten und zweiten Einstellbereich verläuft somit von ungefähr 15°C bis ungefähr 52°C.

In einer weiteren bevorzugten Ausführungsform weist der Durchlauferhitzer eine an den jeweiligen Durchfluss angepasste Heizleistung auf.

Da die Einhebelmischarmatur im zweiten Einstellbereich nicht zwingend einen konstanten Durchfluss aufweist, ist es vorteilhaft, dass der Durchlauferhitzer eine Heizleistung aufweist, die an den Durchfluss angepasst ist, oder, dass die Temperatur des aus dem Durchlauferhitzer austretenden Wassers kontinuierlich gemessen und die Heizleistung entsprechend angepasst wird (Thermostatfunktion).

Der Vorteil darin besteht, dass das Risiko einer Verbrennung reduziert wird, da bei einem vergleichsweise geringen Durchfluss sich das Wasser zu stark aufwärmen würde.

Es besteht jedoch auch die Möglichkeit, im zweiten Einstellbereich den Durchfluss konstant zu halten; dabei ist er bevorzugt kleiner als der maximale Durchfluss im ersten Einstellbereich. Die Heizleistung des Durchlauferhitzers ist in diesem Fall vorzugsweise konstant.

Gemäss einer weiteren bevorzugten Ausführungsform erwärmt der Durchlauferhitzer das von der zweiten Mischwasserabflussöffnung zugeführte Mischwasser um 8°C bis 20°C, vorzugsweise um 10°C bis 12°C.

Diese Bereiche entsprechen den in der Praxis ermittelten, am meisten gebrauchten Werten und erlauben es, einen

Durchlauferhitzer mit einer vergleichsweise geringen Leistung zu verwenden. Gleichzeitig wird Verbrennungen vorgebeugt.

In einer weiteren bevorzugten Ausführungsform ist, im ersten Einstellbereich β und, vorzugsweise im zweiten Einstellbereich δ, durch Schwenken des Bedienhebels um eine Schwenkachse (S), die vorzugsweise rechtwinklig zur Drehachse (K) verläuft, der Durchfluss von Null bis zu einem Maximalwert, beispielsweise 12 l/min, regulierbar.

In beiden Einstellbereichen kann somit der Durchfluss des Wassers eingestellt werden und zwar stufenlos von Null 1/min bis zu einem Maximalwert von beispielsweise 12 1/min, wie dies aus Einhebelmischarmaturen allgemein bekannt ist.

Es ist jedoch auch möglich, dass im zweiten Einstellbereich, beispielsweise mittels einer Kulissensteuerung, der Schwenkbereich des Bedienhebels beziehungsweise des Steuerschafts der Mischerpatrone begrenzt ist, um den Durchfluss konstant und vorzugsweise geringer als der Maximalwert im ersten Einstellbereich zu halten.

Gemäss einer weiteren bevorzugten Ausführungsform der Einhebelmischarmatur nimmt die Wassertemperatur des durch den Wasserauslauf austretenden Wassers beim Drehen des Bedienhebels, ausgehend von der Ruhestellung, im vom Kaltwasser seitigen Ende des ersten bis zum Heisswasser seitigen Ende des zweiten Einstellbereichs, vorzugsweise kontinuierlich, zu.

Ein kontinuierlicher Wassertemperaturanstieg über den ersten und zweiten Einstellbereich hat den Vorteil, dass keine Temperaturstufen auftreten. Dadurch wird eine einfache Handhabung der Sanitärarmatur ermöglicht und Verbrennungen können vermieden werden.

In einer weiteren bevorzugten Ausführungsform weist das Armaturengehäuse einen Aufnahmeraum auf, der durch einen Zwischenboden begrenzt ist und in dem die Mischerpatrone angeordnet ist. Der Zwischenboden weist vier Durchlässe, einen Kaltwasserdurchlass, der mit der Kaltwasserzuflussöffnung strömungsverbunden ist und an den die Kaltwasserleitung anschliessbar ist, einen Warmwasserdurchlass, der mit der Warmwasserzuflussöffnung strömungsverbunden ist und an den die Warmwasserleitung anschliessbar ist, einen ersten Mischwasserdurchlass, der mit der ersten Mischwasserabflussöffnung und dem Wasserauslauf ströumungsverbunden ist, und einen zweiten Mischwasserdurchlass der mit der zweiten Mischwasserabflussöffnung ströumungsverbunden ist, auf, wobei an den zweiten Mischwasserdurchlass eine zum Einlass des Durchlauferhitzers führende Mischwasserabflussleitung angeschlossen ist.

Der Zwischenboden vereinfacht den Anschluss der Kalt- und der Warmwasserleitung sowie der Mischwasserabflussleitung.

Weiter ist es denkbar, eine fertige Einhebelmischarmatur bereitzustellen, die je eine an den Zwischenboden angeschlossene Kaltwasser- und Warmwasserleitung aufweist. So wäre es möglich, diese beiden Leitungen, die jeweils am freien Ende Kupplungen aufweisen, direkt an die Wasserversorgung anzuschliessen, ohne dass zuerst Leitungen mühsam an den Zwischenboden angeschlossen werden müssten. Dies vereinfacht die Montage erheblich.

Es können beispielsweise Innengewinde im Zwischenboden angeformt werden, so dass entsprechende Gewindeanschlüsse verwendet werden können um die Leitungen anzuschliessen.

Weiter hat der Zwischenboden den Vorteil, dass die Mischerpatrone bei der Montage nur auf den Zwischenboden aufgesetzt werden kann, ohne dass die Anschlüsse für die Leitungen an der Mischerpatrone ausgebildet werden müssen.

In der Regel wird die Mischerpatrone dabei, mittels einer Ringmutter, auf den Zwischenboden gedrückt oder gespannt.

Gemäss einer weiteren bevorzugten Ausführungsform weist das Armaturengehäuse ein Innen- und ein Aussengehäuse auf, wobei der Aufnahmeraum sowie der Zwischenboden am Innengehäuse ausgebildet sind und der Wasserauslauf am Aussengehäuse ausgebildet ist. Dabei kann insbesondere das Innengehäuse mehrteilig ausgebildet sein.

Eine solche Ausbildung des Armaturengehäuses erlaubt eine vereinfachte und schnelle Montage der Einhebelmischarmatur.

Es ist auch denkbar, dass der Aufnahmeraum durch das Innen- und das Aussengehäuse gebildet ist.

In einer weiteren bevorzugten Ausführungsform der Einhebelmischarmatur weist der erste Mischwasserdurchlass einen Durchlassabschnitt auf, der in einen, durch das Innengehäuse und das Aussengehäuse begrenzten Ringraum mündet, welcher mit dem Wasserauslauf strömungsverbunden ist.

Der Ringraum erlaubt eine einfache und dichte Strömungsverbindung zwischen dem ersten Mischwasserdurchlass und dem Wasserauslauf.

Weiter ist es durch den Ringraum möglich, den Wasserauslauf drehbar zu lagern, da der Ringraum selbst bei einer Drehbewegung des Wasserauslaufs das Mischwasser an diesen weitergeben kann.

Dieser Durchlassabschnitt ermöglicht es, wenn der Bedienhebel in den ersten Einstellbereich gedreht ist, dem Wasserauslauf über den ersten Mischwasserdurchlass und den Ringraum Mischwasser (vorzugsweise bis ca. 42°C Wassertemperatur) aus der Mischerpatrone zuzuführen. Ist der Auslass des Durchlauferhitzers über eine Mischwasserzuflussleitung mit dem ersten Mischwasserdurchlass verbunden, dann wird, wenn der Bedienhebel in den zweiten Einstellbereich weitergedreht ist, Mischwasser aus dem Durchlauferhitzer (beispielsweise bis ca. 52°C Wassertemperatur) ebenfalls über den Durchlassabschnitt dem Ringraum und dem Wasserauslauf zugeführt.

Gemäss einer weiteren bevorzugten Ausführungsform ist der Wasserauslauf durch eine Ausziehbrause gebildet, wobei diese Ausziehbrause über einen Brauseschlauch mit dem Auslass des Durchlauferhitzers und mit der ersten Mischwasserabflussöffnung strömungsverbunden ist.

Der Brauseschlauch erlaubt es, die Ausziehbrause bei Bedarf aus dem Armaturengehäuse herauszuziehen.

Da der Brauseschlauch mit dem Auslass des Durchlauferhitzers und der ersten Mischwasserabflussöffnung strömungsverbunden ist, kann der Ausziehbrause einerseits Mischwasser aus der Mischerpatrone (erster Einstellbereich, bis beispielsweise ca. 42°C) und andererseits Mischwasser aus dem Durchlauferhitzer (zweiter Einstellbereich, bis beispielsweise ca. 52°C) zugeführt werden.

In einer weiteren bevorzugten Ausführungsform weist die Einhebelmischarmatur ein T-Stück auf, das mit der ersten Mischwasserabflussöffnung, mit dem Auslass des Durchlauferhitzers und, über den Brauseschlauch, mit der Ausziehbrause strömungsverbunden ist.

Das T-Stück ermöglicht eine einfach Verbindung zwischen der Mischwasserabflussöffnung, dem Auslass des Durchlauferhitzers und mit dem Brauseschlauch, sodass je nach Drehung des Bedienhebels Mischwasser aus der Mischerpatrone oder Mischwasser aus dem Durchlauferhitzer in die Ausziehbrause fliesst.

Weiter erlaubt es das T-Stück, die Ausziehbrause beziehungsweise den Brauseschlauch einerseits strömungsverbunden an die Mischwasserabflussöffnung und andererseits strömungsverbunden an den Auslass des Durchlauferhitzers anzuschliessen.

Gemäss einer weiteren bevorzugten Ausführungsform weist die Einhebelmischarmatur ein Rückschlagventil auf, das ein Wasserfluss vom Durchlauferhitzer in Richtung der Ausziehbrause erlaubt, jedoch ein Wasserfluss von der ersten Mischwasserabflussöffnung und dem Brauseschlauch in Richtung des Durchlauferhitzers verhindert.

Wenn der Bedienhebel in den ersten Einstellbereich gedreht ist, verhindert das Rückschlagventil, dass Mischwasser aus der Mischwasserpatrone in den Auslass des Durchlauferhitzers fliessen kann; das Mischwasser gelangt ohne Umwege an die Ausziehbrause. Das Mischwasser kann aber aus dem Auslass des Durchlauferhitzers ungehindert durch das Rückschlagventil fliessen.

Mittels des Rückschlagventils wird somit verhindert, dass im Durchlauferhitzer die Strömungsrichtung umgedreht werden kann und Mischwasser in den Auslass gedrückt wird.

Das Rückschlagventil ist vorzugsweise am T-Stück angeordnet, zwischen dem Auslass des Durchlauferhitzers und dem Eingang in das T-Stück. Es ist auch möglich, das Rückschlagventil in das T-Stück zu integrieren.

Weiter ist es auch denkbar, einen Durchlauferhitzer zu verwenden, der eine deutliche höhere Heizleistung aufweist. So könnte das durchfliessende Mischwasser um eine wesentliche höhere Temperaturdifferenz als 8°C bis 20°C aufgeheizt werden, womit die Einhebelmischarmatur auch in der Industrie verwendet werden könnte.

Weiter betrifft die vorliegende Erfindung eine Mischerpatrone die in eine erfindungsgemässe Einhebelmischarmatur eingebaut werden kann. Die Mischerpatrone weist eine feststehende Scheibe mit einer zur Drehachse konzentrisch angeordneten, ersten Mischwasserabflussöffnung, einer, in einem Radialabstand zur Drehachse angeordneten, insbesondere in Umfangsrichtung langlochartig ausgebildeten, zweiten Mischwasserabflussöffnung und je eine, in dem Radialabstand zur Drehachse angeordneten Kaltwasser- und Warmwasserzuflussöffnung auf.

Die Mischerpatrone weist weiter eine an die feststehende Scheibe anliegende, um die Drehachse drehbare Steuerscheibe mit einem, mit der ersten Mischwasserabflussöffnung verbundenen Kanal, der bezüglich der Drehachse wenigstens annähernd in radialer Richtung verläuft, auf. Der Kanal ist durch drehen der Scheibe mittels eines mit einem Bedienhebel verbindbaren Steuerschafts, ausgehend von einer Ruhestellung, in einer Drehrichtung, in einem ersten Drehbereich β', zuerst mit der Kaltwasserzuflussöffnung, anschliessend zusätzlich mit der Warmwasserzuflussöffnung und schlussendlich nur mit der Warmwasserzuflussöffnung strömungsverbindbar beziehungsweise strömungsverbunden.

In der Steuerscheibe der Mischerpatrone sind zwei, in einer Radialdistanz zur Drehachse angeordnete und in Umfangsrichtung voneinander beabstandete Bogendurchlässe, die durch einen in Richtung der feststehenden Scheibe geschlossenen Verbindungskanal strömungsverbunden sind, angeordnet.

Ist der Kanal mit der Kalt- und/oder Warmwasserzuflussöffnung verbunden, sind die Bogendurchlässe und somit der Verbindungskanal von diesen getrennt.

Beim weiteren Drehen - in der Drehrichtung - des Steuerschafts und somit der Steuerscheibe, aus dem ersten Drehbereich hinaus und dann in einem zweiten Drehbereich, stehen in Letzterem zuerst der Kanal ausser Verbindung mit der Kalt- und der Warmwasserzuflussöffnung sowie die Bogendurchlässe ausser Verbindung mit der Kalt- und der Warmwasserzuflussöffnung. Anschliessend, beim weiteren Drehen in Drehrichtung, ist der eine der Bogendurchlässe mit der Kalt- und Warmwasserzuflussöffnung und der andere der Bogendurchlässe mit der zweiten Mischwasserabflussöffnung strömungsverbindbar beziehungsweise strömungsverbunden. Der Kanal bleibt von diesen Zuflussöffnungen getrennt.

Eine Mischerpatrone mit einer derart ausgebildeten feststehenden Scheibe beziehungsweise drehbaren Steuerscheibe, kann in eine Einhebelmischarmatur gemäss der vorliegenden Erfindung eingesetzt werden. Ein Vorteil besteht darin, dass durch Drehen in einer Drehrichtung der ganze Wassertemperaturbereich, beispielsweise von ca. 15°C bis ca. 52°C, eingestellt werden kann. Der Bedienhebel beziehungsweise der Steuerschaft muss nicht in entgegengesetzter Drehrichtung in eine Ruhestellung zurückgedreht werden um in den zweiten Drehbereich beziehungsweise Einstellbereich zu gelangen.

Der erste Drehbereich entspricht dem ersten Einstellbereich und der zweite Drehbereich dem zweiten Einstellbereich der Einhebelmischarmatur. Die Drehbereiche können beispielsweise mittels eines Getriebes an die Einstellbereiche angepasst werden.

Gemäss einer bevorzugten Ausführungsform der Mischerpatrone ist in einem Heisswasser seitigen Endbereich des zweiten Drehbereichs der eine der Bogendurchlässe ausschliesslich mit der Warmwasserzuflussöffnung und der andere der Bogendurchlässe mit der zweiten Mischwasserabflussöffnung strömungsverbindbar.

Dabei wird dem Einlass des Durchlauferhitzers ausschliesslich Warmwasser aus der Wasserversorgung zugeführt und dieses weiter erwärmt, wodurch Wasser mit der Maximaltemperatur über den Auslass des Durchlauferhitzers dem Wasserauslauf zugeführt wird.

In einer weiteren bevorzugten Ausführungsform kann durch Schwenken des Steuerschafts um eine zur Drehachse rechtwinklig verlaufende Schwenkachse und daher durch Verschieben der Steuerscheibe bezüglich der feststehenden Scheibe in radialer Richtung, ausgehend von einer Einschaltstellung in eine Ausschaltstellung - in Abhängigkeit von der Drehlage - der Kanal beziehungsweise die beiden Bogendurchlässe ausser Verbindung mit der Kalt-und der Warmwassserzuflussöffnung gebracht werden.

Weiter ist durch Schwenken in entgegengesetzter Richtung von der Ausschaltstellung in die Einschaltstellung - in Abhängigkeit von der Drehlage - der Kanal mit der Kalt-und/oder Warmwasserzuflussöffnung beziehungsweise der betreffende Bogendurchlass mit der Kalt- und der Warmwasserzuflussöffnung oder nur mit der Warmwasserzuflussöffnung und der andere Bogendurchlass mit der zweiten Mischwasserabflussöffnung verbindbar.

Der Vorteil dieser Ausführungsform besteht darin, dass im ersten und im zweiten Einstellbereich der Durchfluss eingestellt oder reguliert werden kann und insbesondere im zweiten Einstellbereich nicht konstant sein muss. Hinzu kommt, dass der Wasserfluss durch die Einhebelmischarmatur mit der erwähnten Mischerpatrone, in jeder Drehlage des Bedienhebels durch Schwenken, vorzugsweise Niederschwenken, des Steuerschafts beziehungsweise des Bedienhebels unterbrochen werden kann.

In einer weiteren bevorzugten Ausführungsform sind die feststehende Scheibe und die Steuerscheibe aus Keramik hergestellt.

Keramik ist ein sehr widerstandsfähiges und beständiges Material. Durch die Verwendung von Keramik wird eine verhältnismässig lange Lebensdauer der Mischerpatrone erreicht.

Gemäss einer weiteren bevorzugten Ausführungsform ist der Radialabstand kleiner ist als die Radialdistanz.

Dies ermöglicht es, dass die Einhebelmischarmatur, beziehungsweise die Mischerpatrone, in sämtlichen Drehlagen des Bedienhebels, beziehungsweise des Steuerschafts, in eine Ausschaltstellung gebracht werden kann.

Die Erfindung wird anhand der in den Zeichnungen dargestellten Ausführungsbeispiele erläutert. Es zeigen rein schematisch:
- Fig. 1: eine Einhebelmischarmatur mit einem fest am Armaturengehäuse angeordneten Wasserauslauf und einem Durchlauferhitzer;
- Fig. 2: eine Draufsicht auf einen Vertikalschnitt entlang der Linie II-II der Einhebelmischarmatur gemäss Figur 1, ohne die Kalt-, Warm- und Mischwasserabflussleitung;
- Fig. 3: eine Draufsicht auf einen Vertikalschnitt entlang der Linie III-III der Einhebelmischarmatur gemäss Figur 1, ohne die Kalt-, Warm- und Mischwasserabflussleitung;
- Fig. 4: eine Draufsicht auf einen Horizontalschnitt entlang der Linie IV-IV durch einen Zwischenboden gemäss Figur 2 mit angedeuteten Einstellbereichen;
- Fig. 5: eine Einhebelmischarmatur mit einer Ausziehbrause und dem Durchlauferhitzer;
- Fig. 6: eine Draufsicht von oben auf eine feststehende Scheibe einer Mischerpatrone mit einer ersten und einer zweiten Mischwasserabflussöffnung und einer Kalt- sowie einer Warmwasserzuflussöffnung;
- Fig. 7: eine Draufsicht von oben auf eine drehbare Steuerscheibe der Mischerpatrone mit zwei Bogendurchlässen und einem, mit der ersten Mischwasserabflussöffnung strömungsverbundenen Kanal;
- Fig. 8: eine Draufsicht auf die drehbare Steuerscheibe in Ruhestellung, mit gestrichelt gezeigten Öffnungen in der feststehenden Scheibe;
- Fig. 9: eine Draufsicht auf eine Anordnung gemäss Figur 8, mit der Steuerscheibe in einer teilweisen Offenstellung;
- Fig. 10: eine Draufsicht auf eine Anordnung gemäss Figur 8 und 9, mit der Steuerscheibe in vollständiger Offenstellung;
- Fig. 11: eine Draufsicht von oben auf die feststehende Scheibe gemäss einer weiteren Ausführungsform, mit der ersten und der zweiten Mischwasserabflussöffnung und der Kalt- sowie der Warmwasserzuflussöffnung;
- Fig. 12: eine Draufsicht von unten auf die feststehende Scheibe gemäss Figur 11;
- Fig. 13: eine Draufsicht von oben auf die drehbare und verschiebbare Steuerscheibe mit zwei Bogendurchlässen und einer, mit der ersten Mischwasserabflussöffnung deckungsgleichen Öffnung;
- Fig. 14: eine Draufsicht von unten auf die Steuerscheibe gemäss Figur 13; und
- Fig. 15: eine Draufsicht von oben auf die drehbare und verschiebbare Steuerscheibe mit teilweise sichtbarer feststehender Scheibe gemäss Figur 11 und gestrichelt gezeigten Kalt-, Warm- und zweiter Mischwasserabflussöffnung.

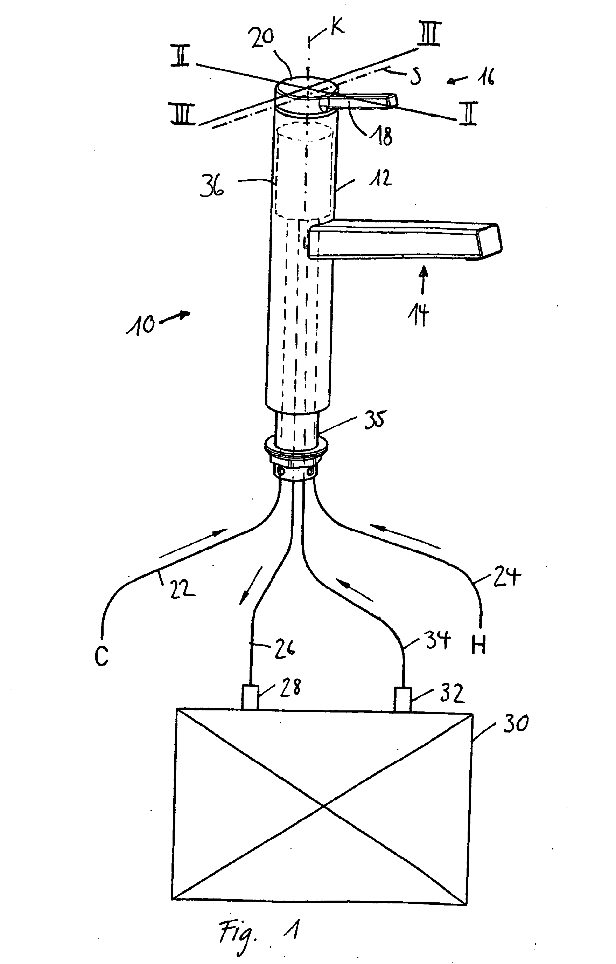

Figur 1 zeigt eine Einhebelmischarmatur 10 mit einem Armaturengehäuse 12 und einem daran angeordneten Wasserauslauf 14. An der Oberseite 16 der Einhebelmischarmatur 10 ist ein Bedienhebel 18 mit einer Abdeckkappe 20 angeordnet. Der Bedienhebel 18 ist, zusammen mit der Abdeckkappe 20, um eine Drehachse K drehbar und um eine zur Drehachse K rechtwinklig verlaufende Schwenkachse S schwenkbar, um entsprechend die Wassertemperatur durch Drehen einzustellen und den Durchfluss durch Schwenken zu regulieren.

Eine Kaltwasserleitung 22 und eine Warmwasserleitung 24 führen in die Einhebelmischarmatur 10 hinein. Eine Mischwasserabflussleitung 26 führt aus der Einhebelmischerarmatur 10 an einen Einlass 28 eines Durchlauferhitzers 30. Von einem Auslass 32 des Durchlauferhitzers 30 führt eine Mischwasserzuflussleitung 34 in die Einhebelmischarmatur 10. Die Leitungen 22, 24, 26, 34 verlaufen im Innern eines Sockelrohrs 35.

Der Durchlauferhitzer 30 ist beispielsweise ein Modell MDX 3..7 der Firma CLAGE mit einer Nennleistung von 3.5 kW.

Die Kaltwasserleitung 22, die Warmwasserleitung 24 und die Mischwasserabflussleitung 26 sind mit einer Mischerpatrone 36 strömungsverbunden. Die Mischerpatrone 36 ist im Armaturengehäuse 12 angeordnet und über den Bedienhebel 18 steuerbar.

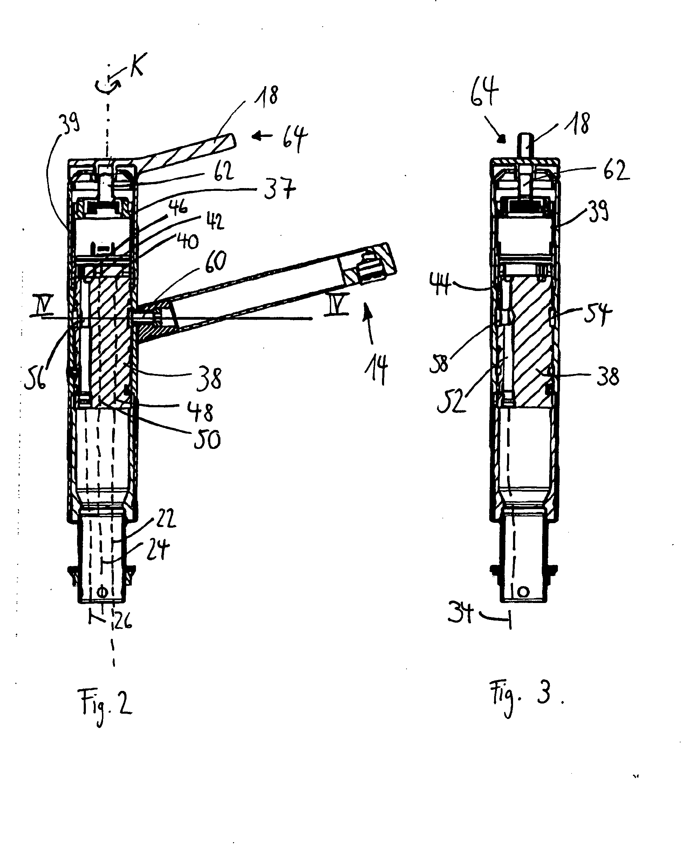

Die Mischerpatrone 36 ist, wie in Figur 2 gezeigt, in einen Aufnahmeraum 37 eingesetzt und in bekannter Art und Weise mittels einer Mutter auf einen Zwischenboden 38 runtergespannt. Der Aufnahmeraum 37 und der Zwischenboden 38 sind im gezeigten Ausführungsbeispiel an einem Innengehäuse 39 des Armaturengehäuses 12 ausgebildet. Der Wasserauslauf 14 ist am Aussengehäuse 12 ausgebildet.

Die Mischerpatrone 36 weist eine Kaltwasserzuflussöffnung 40, eine Warmwasserzuflussöffnung 42, eine erste Mischwasserabflussöffnung 44 und eine zweite Mischwasserabflussöffnung 46 auf, siehe Fig. 2 und 3. Die Kaltwasserzuflussöffnung 40 ist mit der Kaltwasserleitung 22, die Warmwasserzuflussöffnung 42 mit der Warmwasserleitung 24, die erste Mischwasserabflussöffnung 44 mit der Mischwasserzuflussleitung 34 sowie einem Durchlassabschnitt 58 und die zweite Mischwasserabflussöffnung 46 mit der Mischwasserabflussleitung 26, strömungsverbunden.

Der Zwischenboden 38 weist vier Durchlässe auf. Einen Kaltwasserdurchlass 48 der mit der Kaltwasserleitung 22 und der Kaltwasserzuflussöffnung 40 strömungsverbunden ist, einen Warmwasserdurchlass 50 der mit der Warmwasserzuflussöffnung 42 und der Warmwasserleitung 24 strömungsverbunden ist, einen ersten Mischwasserdurchlass 52 der mit der ersten Mischwasserabflussöffnung 44, einem Ringraum 54 und der Mischwasserzuflussleitung 34 strömungsverbunden ist und einen zweiten Mischwasserdurchlass 56 der mit der Mischwasserabflussleitung 26 und der zweiten Mischwasserabflussöffnung 46 strömungsverbunden ist (siehe auch Figur 3).

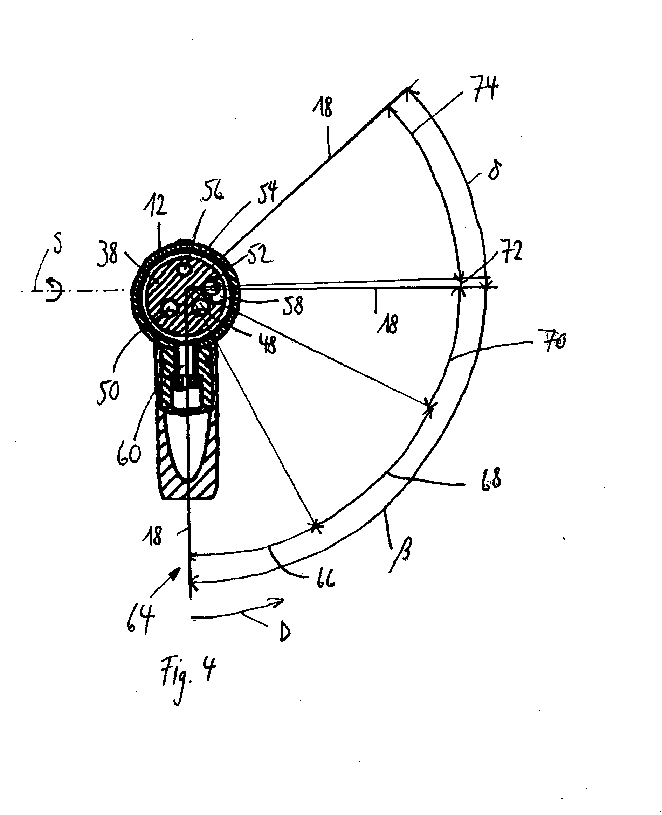

Der erste Mischwasserdurchlass 52 ist durch einen Durchlassabschnitt 58, der in radialer Richtung bezüglich der Drehachse K ungefähr auf der Höhe des Wasserauslaufs 14 verläuft, mit dem Ringraum 54 verbunden. Der Ringraum 54 ist über einen Auslaufdurchlass 60, der ebenfalls in radialer Richtung bezüglich der Drehachse K ungefähr auf der Höhe des Wasserauslaufs 14 verläuft, mit dem Wasserauslauf 14 strömungsverbunden. Der Ringraum 54, wie in Figur 4 gezeigt, verläuft in Umfangsrichtung um den Zwischenboden 38 und ist durch das Innengehäuse 39 und das Aussengehäuse 12 begrenzt.

Die Kaltwasserleitung 22, die Warmwasserleitung 24, die Mischwasserabflussleitung 26 und die Mischwasserzuflussleitung 34 sind in den Zwischenboden 38 eingewindet oder in einer anderen bekannten Art und Weise angeschlossen. Die Öffnungen 40, 42, 44, 46 der Mischerpatrone 36 und die Durchlässe 48, 50, 52, 56 des Zwischenbodens 38 sind mittels O-Ring-Dichtungen in bekannter Art und Weise abgedichtet und strömungsverbunden.

Die Mischerpatrone 36 ist über einen Steuerschaft 62 mit dem Bedienhebel 18 verbunden. Der Bedienhebel 18 kann, ausgehend von einer Ruhestellung 64, in einen ersten Einstellbereich β ― in einer Drehrichtung D - wie in Figur 4 gezeigt, gedreht werden.

Im ersten Einstellbereich β fliesst Mischwasser, welches in der Mischerpatrone 36 gemischt wird, durch die erste Mischwasserabflussöffnung 44 in den Wasserauslauf 14 und tritt dort aus. Der maximale Durchfluss beträgt ca. 12 1/min. Im ersten Einstellbereich β kann die Wassertemperatur durch Drehung des Bedienhebels 18 um die Drehachse K eingestellt werden. Die Mischwassertemperatur ist im ersten Einstellbereich β, ausgehend von der Ruhestellung 64, zwischen ca. 15°C (Drehwinkel von ca. 1°) bis ca. 42°C (Drehwinkel ca. 80°), wählbar.

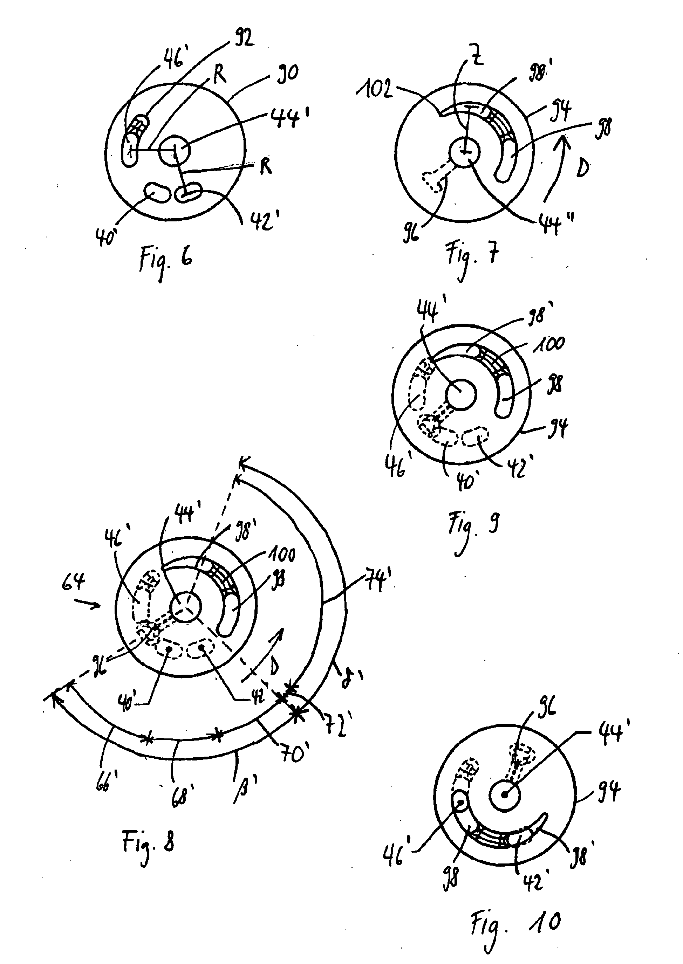

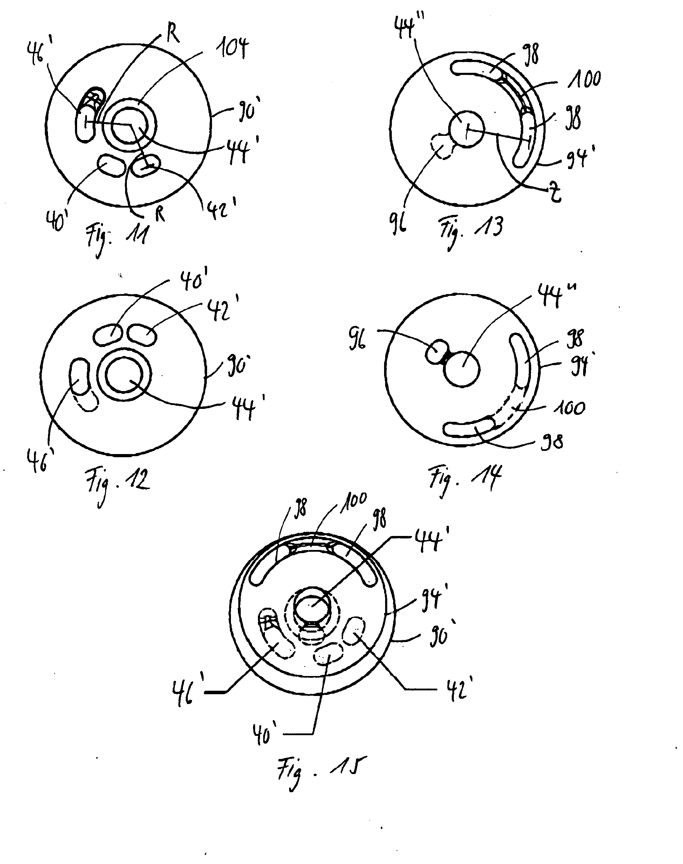

Wird eine Mischerpatrone 36 mit konstantem Durchfluss (siehe auch Beschreibung zu den Figuren 6 bis 10) in die Einhebelmischarmatur 10 eingebaut und befindet sich der Bedienhebel 18 in einem ersten Drehabschnitt 66 des ersten Einstellbereichs β, nimmt der Durchfluss - ausgehend von der Ruhestellung 64 - zuerst von Null 1/min auf den Maximalwert von ca. 12 L/min. zu. Es ist aber auch denkbar, eine Mischerpatrone 36 in die Einhebelmischarmatur 10 einzubauen, die es erlaubt den Durchfluss einzustellen. Der Durchfluss kann entsprechend in jeder Drehlage durch Schwenken des Bedienhebels 18 um die Schwenkachse S reguliert oder eingestellt werden (siehe Beschreibung zu den Figuren 11 bis 15).

Im ersten Drehabschnitt 66 fliesst nur Kaltwasser in den Wasserauslauf 14. Befindet sich der Bedienhebel 18 in einem zweiten Drehabschnitt 68 des ersten Einstellbereichs β , fliesst Mischwasser mit zunehmender Temperatur - beim weiteren Drehen in Drehrichtung D - in den Wasserauslauf 14. Befindet sich der Bedienhebel 18 in einem dritten Drehabschnitt 70 des ersten Einstellbereichs β, fliesst Warmwasser aus der Wasserversorgung, mit ca. 42°C, in den Wasserauslauf 14.

Der Bedienhebel 18 kann aus dem ersten Einstellbereich β hinaus, in einen zweiten Einstellbereich δ hinein, gezeigt in Figur 4, gedreht werden. Befindet sich der Bedienhebel 18 in einem ersten Drehsektor 72 des zweiten Einstellbereichs δ, der von einem Drehwinkel zwischen ca. 90° bis ca. 95° reicht, fliesst kein Wasser aus dem Wasserauslauf 14. Dies signalisiert dem Benutzer, dass beim weiteren Drehen des Bedienhebels 18 in Drehrichtung D, das Mischwasser beziehungsweise das Warmwasser über den Durchlauferhitzer 30 fliesst und anschliessend aus dem Wasserauslauf 14 austritt.

Befindet sich der Bedienhebel 18 in einem zweiten Drehsektor 74 des zweiten Einstellbereichs δ, fliesst zu Beginn Mischwasser, welches in der Mischerpatrone 36 gemischt wird, durch die zweite Mischwasserabflussöffnung 46 und durch die Mischwasserabflussleitung 26 in den Einlass 28 des Durchlauferhitzers 30. Beim weiteren Drehen des Bedienhebels - in Drehrichtung D - im zweiten Einstellbereich δ nimmt die Wassertemperatur des Mischwasser zu bis nur noch Warmwasser aus der Wasserversorgung in den Durchlauferhitzer 30 fliesst und dort erwärmt wird. Das am Durchlauferhitzer 30 erwärmte Wasser wird dem Wasserauslauf 14 durch den Auslass 32 der, mit dem Wasserauslauf 14 strömungsverbundenen, Mischwasserzuflussleitung 34 zugeführt. Das Mischwasser tritt anschliessend durch den Wasserauslauf 14 als Heisswasser aus. Im zweiten Einstellbereich δ kann somit die Wassertemperatur durch Drehung des Bedienhebels 18 um die Drehachse K reguliert werden. Der Bedienhebel 18 kann im zweiten Einstellbereich δ bis zu einem Stopp (nicht gezeigt), der in bekannter Art und Weise ausgebildet ist, gedreht werden.

Im zweiten Einstellbereich δ kann der Durchfluss ebenfalls durch Schwenken des Bedienhebels 18 um die Schwenkachse S reguliert werden, je nach Verwendung des Mischerpatronentyps. Dies muss aber nicht zwingend sein, wie bereits erwähnt. Es ist auch möglich den Durchfluss im zweiten Einstellbereich δ konstant zu halten. Im zweiten Einstellbereich δ ist es allerdings von Vorteil, wenn der maximale Durchfluss geringer ist als der Maximalwert beziehungsweise der Maximaldurchfluss im ersten Einstellbereich β. So lässt sich die Wassertemperatur des aus dem Durchlauferhitzer 30 austretenden Wassers mit geringerem Energieverbrauch erzielen.

In Figur 4 sind die Durchlässe 48, 50, 52, 56 im Zwischenboden 38 gezeigt. Ebenfalls gut sichtbar ist der Durchlassabschnitt 58, der in den Ringraum 54 führt, sowie der Auslassdurchlass 60, der in den Wasserauslauf 14 führt.

Befindet sich der Bedienhebel 18 in dem ersten Einstellbereich β (siehe Figur 4) so ist die erste Mischwasserabflussöffnung 44 der Mischerpatrone 36 geöffnet und das Mischwasser fliesst in den ersten Mischwasserdurchlass 52. Vom ersten Mischwasserdurchlass 52 fliesst das Mischwasser in den Durchlassabschnitt 58 und tritt anschliessend, über den Ringraum 54, den Auslassdurchlass 60 und ein Wasserauslaufrohr 76 durch einen Strahlbildner 78 aus dem Mündungsbereich 66 aus. Die zweite Mischwasserabflussöffnung 46 der Mischerpatrone 36 ist geschlossen, somit kann das Mischwasser nicht durch die Mischwasserzuflussleitung 34 und über den Durchlauferhitzer 30 in die Mischwasserabflussleitung 26 fliessen.

Befindet sich der Bedienhebel 18 im zweiten Einstellbereich δ und ausserhalb des ersten Drehsektors 72 im zweiten Drehsektor 74 (siehe Figur 4), so ist die zweite Mischwasserabflussöffnung 46 der Mischerpatrone 36 geöffnet und das Mischwasser fliesst durch den zweiten Mischwasserdurchlass 56 in die Mischwasserabflussleitung 26, die in den Einlass 28 des Durchlauferhitzers 30 führt. Das Mischwasser wird im Durchlauferhitzer 30 erwärmt und fliesst anschliessend durch den Auslass 32 in die Mischwasserzuflussleitung 34 und von da in den ersten Mischwasserdurchlass 52. Da die erste Mischwasserabflussöffnung 44 der Mischerpatrone 36 geschlossen ist, kann das erwärmte Mischwasser aus dem Durchlauferhitzer 30 nur durch den Durchlassabschnitt 58 heraus in den Ringraum 54 fliessen. Anschliessend tritt das erwärmte Mischwasser, wie oben beschrieben, im Mündungsbereich 66 als Mischwasser, das eine Wassertemperatur von ca. 35°C bis ca. 52°C aufweisen kann (je nach der Wassertemperatur des in den Durchlauferhitzer 30 einfliessenden Mischwassers und somit je nach Drehlage des Bedienhebels 18), aus.

Im zweiten Drehsektor 74 nimmt die Wassertemperatur - beim Drehen des Bedienhebels 18 in Drehrichtung D - kontinuierlich zu; beispielsweise von ca. 35°C bis zur Höchsttemperatur von ca. 52°C.

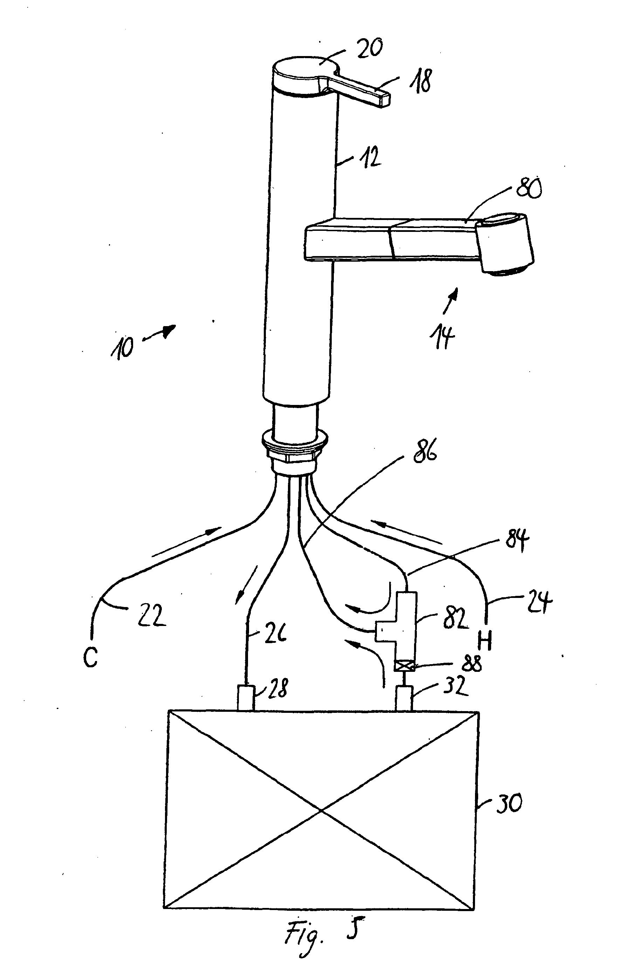

Figur 5 zeigt eine Einhebelmischarmatur 10 mit einer Ausziehbrause 80 und dem Durchlauferhitzer 30. Im Unterschied zu der in Figur 1 gezeigten Ausführungsform der Einhebelmischarmatur 10 wird die Mischwasserzufuhr an die Ausziehbrause 80 über ein T-Stück 82 und nicht über den Ringraum 54 erreicht. Die Kaltwasserzuflussleitung 22, die Warmwasserzuflussleitung 24 und die Mischwasserabflussleitung 26 sind wie bereits erläutert angeschlossen.

Am T-Stück 82 ist eine Mischwasserleitung 84, die mit dem ersten Mischwasserdurchlass 52 (siehe Figur 4) und somit mit der ersten Mischwasserabflussöffnung 44 der Mischerpatrone 36 strömungsverbunden ist, angeschlossen. Weiter sind am T-Stück 82 ein Brauseschlauch 86, der das T-Stück 82 mit der Ausziehbrause 80 verbindet, und die Mischwasserzuflussleitung 34 angeschlossen.

Zwischen dem T-Stück 82 und dem Auslass 32 des Durchlauferhitzers 30 ist ein Rückschlagventil 88 angeordnet. Dieses Rückschlagventil 88 erlaubt den Mischwasserfluss vom Auslass 32 in Richtung des Brauseschlauchs 86, verhindert jedoch den Mischwasserfluss vom Brauseschlauch 86 beziehungsweise von der Mischwasserleitung 84 in Richtung des Auslasses 32 des Durchlauferhitzers 30.

Wenn sich der Bedienhebel 18 im ersten Einstellbereich β befindet, fliesst das Mischwasser aus der ersten Mischwasserabflussöffnung 44 der Mischwasserpatrone 36 durch den ersten Mischwasserdurchlass 52 in die Mischwasserleitung 84. Von der Mischwasserleitung 84 gelangt das Mischwasser durch das T-Stück 82 in den Brauseschlauch 86 und von da in die Ausziehbrause 80 wo es anschliessend aus dem Wasserauslauf 14 austritt. Das Rückschlagventil 88 verhindert, dass das Mischwasser in Richtung des Durchlauferhitzers 30 ausweichen kann.

Wenn sich der Bedienhebel 18 im zweiten Einstellbereich δ, ausserhalb des ersten Drehsektors 72 befindet, fliesst das Mischwasser aus der zweiten Mischwasserabflussöffnung 46 der Mischwasserpatrone 36 durch den zweiten Mischwasserdurchlass 56 in die Mischwasserabflussleitung 26 und über den Einlass 28 in den Durchlauferhitzer 30. Anschliessend fliesst das Mischwasser vom Durchlauferhitzer 30 durch den Auslass 32, das T-Stück 82 und das Rückschlagventil 88 in den Brauseschlauch 86 und von da in die Ausziehbrause 80, wobei es anschliessend aus dem Wasserauslauf 14 austritt.

Wenn sich der Bedienhebel 18 im zweiten Einstellbereich δ befindet, ist die erste Mischwasserabflussöffnung 44 geschlossen. Somit kann das Mischwasser, welches im Durchlauferhitzer 30 erwärmt wurde, im T-Stück 82 nicht in die Mischwasserleitung 84 fliessen, sondern wird in den Brauseschlauch 86 und in die Ausziehbrause 80 geleitet.

Befindet sich der Bedienhebel 18 im ersten Drehsektor 72, tritt kein Mischwasser aus der Ausziehbrause 80 der Einhebelmischarmatur 10. Die Mischerpatrone 36 lässt in dieser Drehlage keinen Durchfluss zu. Selbstverständlich ist es auch bei dieser Einhebelmischarmatur 10 möglich, eine Mischerpatrone 36 einzubauen, die einen konstanten Durchfluss (Figuren 6 bis 10) oder auch eine Mischerpatrone 36 einzubauen, die einen durch schwenken des Bedienhebels 18 einstellbaren Durchfluss (Figuren 11 bis 15) aufweist.

Figur 6 zeigt eine Draufsicht von oben auf eine feststehende Scheibe 90 einer erfindungsgemässen Mischerpatrone 36 mit einer zur Drehachse K konzentrisch angeordneten ersten Mischwasserabflussöffnung 44' und einer, in einem Radialabstand R zur Drehachse K angeordneten, in Umfangsrichtung der Scheibe 90 langlochartig ausgebildeten zweiten Mischwasserabflussöffnung 46'. Die zweite Mischwasserabflussöffnung 46' weist an einem Ende 92, auf der Oberseite der Scheibe 90, einen in Umfangsrichtung auslaufenden Trichtereinlauf auf. Weiter weist die Scheibe 90 je eine im Radialabstand R zur Drehachse K angeordnete Kaltwasser- 40' und Warmwasserzuflussöffnung 42' auf.

Figur 7 zeigt eine Draufsicht von oben auf eine, an die feststehende Scheibe 90 anliegende, um die Drehachse K drehbare Steuerscheibe 94 mit einem, mit der ersten Mischwasserabflussöffnung 44" verbundenen und gestrichelt gezeigten Kanal 96. Der Kanal 96 ist nach oben, entsprechend von der festehenden Scheibe 90 weggerichtet, geschlossen und mündet in die mit der ersten Mischwasserabflussöffnung 44' deckungsgleiche, Mischwasserabflussöffnung 44" und ist somit mit dieser permanent strömungsverbunden. Der Kanal 96 verläuft bezüglich der Drehachse K in radialer Richtung und weist eine Länge auf, die dem Radialabstand R entspricht, wobei am radial aussenliegenden Ende eine mit der Kalt- 40' oder Warmwasserzuflussöffnung 42' in Deckung bringbare Erweiterung ausgebildet ist. Der Kanal 96 verläuft somit nicht durchgehend vom Zentrum bis zur Peripherie der Scheibe sondern ist am radial aussenliegenden Ende geschlossen.

Durch Drehen der Scheibe 90 mittels des Steuerschafts 62, ausgehend von der Ruhestellung 64 (siehe auch Figur 8 und 9, wobei die Figur 9 eine leichte Offenstellung zeigt), in der Drehrichtung D, in einem ersten Drehbereich β', ist der Kanal 96 zuerst mit der Kaltwasserzuflussöffnung 40', anschliessend zusätzlich mit der Warmwasserzuflussöffnung 42' und schlussendlich nur mit der Warmwasserzuflussöffnung 42' strömungsverbindbar beziehungsweise strömungsverbunden. Das Kalt-, Misch- oder Warmwasser fliesst dabei von der Kalt- 40' beziehungsweise der Warmwasserzuflussöffnung 42' in den Kanal 96, von dort in die mit der ersten Mischwasserabflussöffnung 44' deckungsgleiche, Mischwasserabflussöffnung 44'' und schliesslich durch die erste Mischwasserabflussöffnung 44' der feststehenden Scheibe 90 in den ersten Mischwasserdurchlass 52 des Zwischenbodens 38 der Einhebelmischarmatur 10, falls die Mischerpatrone 36 in der Einhebelmischarmatur 10 eingebaut ist.

Figur 7 zeigt weiter die drehbare Steuerscheibe 94 mit zwei, in einer Radialdistanz Z zur Drehachse K angeordneten und in Umfangsrichtung voneinander beabstandeten Bogendurchlässe 98. Die Bogendurchlässe 98 sind durch einen in Richtung der feststehenden Scheibe 90 geschlossenen Verbindungskanal 100 strömungsverbunden. Der in Drehrichtung D voraus liegende Bogendurchlass 98' weist einen Querschnitt auf, der sich in Drehrichtung D, ausgehend vom Verbindungskanal 100 bis zur Spitze 102, in seiner Breite (in radialer Richtung) verjüngt. Dadurch wird bei der Drehbewegung vom ersten in den zweiten Drehbereich δ' , der Durchfluss im zweiten Drehbereich δ' nicht schlagartig von Null auf den Maximalwert erhöht.

Figur 8 zeigt die beiden aneinander dichtend anliegenden Scheiben 90, 94 in einer Ruhestellung 64. Es fliesst kein Wasser durch die erste oder die zweite Mischwasserabflussöffnung 44', 46'. Die Mischerpatrone 36 ist geschlossen. In Figur 8 sind ausserdem der erste Drehbereich β' und der zweite Drehbereich δ' gezeigt. Auch der erste, zweite und dritte Drehabschnitt 66', 68', 70' des ersten Drehbereichs β' und der erste und zweite Drehsektor 72', 74' des zweiten Drehbereichs δ' sind schematisch dargestellt.

Figur 9 zeigt die drehbare Steuerscheibe 94 in einer teilweisen Offenstellung, wobei Kaltwasser durch die Kaltwasserzuflussöffnung 40' in den Kanal 96 fliesst und durch die erste Mischwasserabflussöffnung 44' austritt.

Figur 10 zeigt die Mischerpatrone 36 in einer bis zum Endanschlag geöffneten Offenstellung. Die Steuerscheibe 94 wurde in dieser Position durch den Steuerschaft 62 der Mischerpatrone 36 durch den ersten Drehabschnitt 66', in welchem nur Kaltwasser an die Mischwasserabflussöffnung 44' abgegeben wird, den zweiten Drehabschnitt 68', in welchem Mischwasser mit zunehmender Temperatur an die erste Mischwasserabflussöffnung 44' abgegeben wird, den dritten Drehabschnitt 70', in welchem nur Warmwasser an die Mischwasserabflussöffnung 44' abgegeben wird, den ersten Drehsektor 72' , in welchem kein Wasser abgegeben wird und den zweiten Drehsektor 74', in welchem zuerst Mischwasser und anschliessend beim Endanschlag Warmwasser (aus der Warmwasserversorgung) an die zweiten Mischwasserabflussöffnung 46' und somit eingebauten Zustand an den Durchlauferhitzer 30 abgegeben wird, bewegt.

In Figur 10 ist der in Drehrichtung D voraus liegende Bogendurchlass 98' mit der Warmwasserzuflussöffnung 42' und der andere Bogendurchlass 98 mit der zweiten Mischwasserabflussöffnung 46' strömungsverbunden. Das Warmwasser aus der Warmwasserversorgung fliesst somit von der Warmwasserzuflussöffnung 42' in den voraus liegenden Bogendurchlass 98', anschliessend durch den Verbindungskanal 100 in den anderen Bogendurchlass 98, von dort in die zweite Mischwasserabflussöffnung 46' und von da, falls die Mischerpatrone 36 in der Einhebelmischarmatur 10 eingebaut ist, in den Durchlauferhitzer 30.

Die drehbare Steuerscheibe 94 ist an der von der feststehenden Scheibe 90 abgewandten Seite mit einer an die Steuerscheibe 94 anliegende, dritte Scheibe (hier nicht gezeigt) abgedeckt, wodurch die Bogendurchlässe 98, 98' und die mit der ersten Mischwasserabflussöffnung 44' deckungsgleiche, Mischwasserabflussöffnung 44" nach oben geschlossen sind.

Die Scheiben 90, 94 können aus Keramik, Metall, Kunststoff oder ähnlichen Materialien hergestellt sein.

Die in den Figuren 6 bis 10 gezeigte Ausführungsform der Mischerpatrone 36 ist jeweils in der Ruhestellung 64 und im ersten Drehsektor 72' geschlossen. Der Durchfluss ist nur zu Beginn des ersten Drehabschnitts 66' und des zweiten Drehsektors 74' regulierbar. Ansonsten ist dieser konstant.

Figur 11 zeigt eine Draufsicht von oben auf die feststehende Scheibe 90' der weiteren Ausführungsform Mischerpatrone 36 mit der zur Drehachse K konzentrisch angeordneten ersten Mischwasserabflussöffnung 44' und der, in einem Radialabstand R zur Drehachse K angeordneten, in Umfangsrichtung der Scheibe 90' langlochartig ausgebildeten zweiten Mischwasserabflussöffnung 46'. Die erste Mischwasserabflussöffnung 44' weist dabei eine konusförmige Querschnitterweiterung 104 im oberen Bereich, daher in dem der drehbaren Scheibe 94' zugewandten Bereich, auf. Die zweite Mischwasserabflussöffnung 46' weist an einem Ende 92 und auf der Oberseite der Scheibe 90', einen in Umfangsrichtung auslaufenden Trichtereinlauf auf. Weiter weist die Scheibe 90' je eine in dem Radialabstand R zur Drehachse K angeordnete Kaltwasser-40' und Warmwasserzuflussöffnung 42' auf.

Figur 12 zeigt die Steuerscheibe 90' aus Figur 11 in einer Draufsicht von unten, das heisst im eingebauten Zustand auf eine Seite die dem Zwischenboden 38 zugewandt ist. Die erste und zweite Mischwasserabflussöffnung 44', 46' sowie die Kalt- 40' und Warmwasserzuflussöffnung 42' sind gut sichtbar.

Figur 13 zeigt eine Draufsicht von oben auf die, an die feststehende Scheibe 90' anliegende, um die Drehachse K drehbare und in radialer Richtung verschiebbare Steuerscheibe 94' mit dem, mit der ersten Mischwasserabflussöffnung 44' verbindbaren und gestrichelt gezeigten Kanal 96. Die Steuerscheibe 94' ist durch Schwenken des Steuerschafts 62 um die Schwenkachse S verschiebbar.

Der Kanal 96 ist nach oben, daher von der festehenden Scheibe 90' weggerichtet, geschlossen und mündet in die mit der ersten Mischwasserabflussöffnung 44' deckungsgleichen, Mischwasserabflussöffnung 44" und ist somit mit dieser permanent strömungsverbunden. Der Kanal 96 verläuft bezüglich der Drehachse K in radialer Richtung und weist eine Länge auf, die kleiner ist als der Radialabstand R, wobei am radial aussenliegenden Ende, eine mit der Kalt- 40' oder Warmwasserzuflussöffnung 42' in Verbindung bringbare Erweiterung ausgebildet ist. Der Kanal 96 verläuft also nicht durchgehend vom Zentrum bis zur Peripherie der Scheibe sondern ist am radial aussenliegenden Ende geschlossen.

Figur 13 zeigt weiter die zwei, in einer Radialdistanz Z zur Drehachse K angeordneten und in Umfangsrichtung voneinander beabstandeten Bogendurchlässe 98. Die Bogendurchlässe 98 sind durch den in Richtung der feststehenden Scheibe 90' geschlossenen Verbindungskanal 100 strömungsverbunden. Die beiden Bogendurchlässe 98 weisen bei dieser Ausführungsform der Mischerpatrone 36 die gleiche nierenförmige Form auf.

Figur 14 zeigt eine Draufsicht von unten auf eine drehbare Steuerscheibe 94' mit dem Kanal 96, den beiden Bogendurchlässen 98 sowie dem gestrichelt angedeuteten Verbindungskanal 100.

Figur 15 zeigt die drehbare sowie verschiebbare Steuerscheibe 94' und die feststehende Scheibe 90', die einen grösseren Radius als die drehbare Scheibe 94' aufweist. Die Steuerscheibe 94' befindet sich in einer Ausschaltstellung. Dabei siend der Kanal 96 und die Bogendurchlässe 98 ausser Überlappung, das heisst ausser Verbindung, mit der Kalt- 40' und der Warmwasserzuflussöffnung 42'.

Wird der Steuerschaft 62 hochgeschwenkt, von der Ausschaltstellung in eine Einschaltstellung, so gelangt der Kanal 96 in Verbindung mit der Kaltwasserzuflussöffnung 40' und Kaltwasser fliesst durch den Kanal 96 in die erste Mischwasserabflussöffnung 44'; dies bei entsprechenden Drehstellung des Bedienhebels 18 und Steuerschafts 62. Durch Drehen kann, wie bereits beschrieben, die Wassertemperatur im ersten Drehbereich β' reguliert werden. Im ersten Drehbereich β' kann in jeder Drehlage durch Schwenken, vorzugsweise Niederschwenken, des Bedienhebels 18 beziehungsweise des Steuerschafts 62 der Durchfluss durch die Mischerpatrone 36 unterbrochen beziehungsweise eingestellt werden. Die Steuerscheibe 94' bewegt sich in diesem Fall von der Einschaltstellung in die Ausschaltstellung. Durch Hochschwenken des Bedienhebels 18 bewegt sich die Steuerscheibe 94' von der Ausschaltstellung in die Einschaltstellung und der Durchfluss nimmt von 0 1/min auf den Maximalwert, vorzugsweise 12 1/min, zu.

Die Mischerpatrone 36 gemäss den Figuren 11 bis 15 weist im ersten Drehsektor 72' (Fig. 8) wiederum einen Drehabschnitt (Unterbruch) auf, in dem kein Wasser durch die erste oder zweite Mischwasserabflussöffnung 44', 46' fliesst, selbst wenn sich der Bedienhebel 18 beziehungsweise die Steuerscheibe 94' in der Einschaltstellung befindet.

Wird der Steuerschaft 62 beziehungsweise die Steuerscheibe 94' in den zweiten Drehbereich δ' bewegt, fliesst im ersten Drehsektor 72' wie erwähnt kein Wasser aus der Mischerpatrone 36. Im zweiten Drehsektor 74' fliesst, sofern sich die Steuerscheibe 94 in der Einschaltstellung befindet, beim Drehen in Drehrichtung D zuerst Mischwasser und anschliessend Warmwasser in den in Drehrichtung D voraus liegenden Bogendurchlass 98, anschliessend in den Verbindungskanal 100 und schliesslich in den in Drehrichtung D nacheilenden Bogendurchlass 98 und von dort in die zweite Mischwasserabflussöffnung 46'. Der Durchfluss ist dabei in jeder Drehlage des Bedienhebels 18 beziehungsweise des Steuerschafts 62 im zweiten Drehbereich δ' einstellbar, mit Ausnahme im ersten Drehsektor 72' und in der Ruhelage 64 des Bedienhebels 18 (eingebauter Zustand). In der Ruhelage 64 des Bedienhebels 18 beziehungsweise des Steuerschafts 62 befindet sich der Kanal 96 zwischen der zweiten Mischwasserabflussöffnung 46' und der Kaltwasserzuflussöffnung 40'. In dieser Drehlage fliesst selbst beim Hochschwenken des Bedienhebels und somit beim Verschieben der Steuerscheibe 94' in die Einschaltstellung kein Wasser aus der Mischerpatrone 36.

Der Radialabstand R ist dabei kleiner als die Radialdistanz Z; vergleiche Fig. 11 und 13. Dadurch sind die Öffnungen 40' , 42', 44', 46' , in der Einschaltstellung der Steuerscheibe 94' , mit dem Kanal 96 oder den Bogendurchlässen 98 in den betreffenden Drehstellungen strömungsverbunden, auch beim Drehen des Bedienhebels 18 (eingebauter Zustand) beziehungsweise des Steuerschafts 62; in der Ausschaltstellung sind diese Verbindungen unterbrochen.

Die in den Figuren 11 bis 15 gezeigte Ausführungsform der Mischerpatrone 36 erlaubt es, die Durchflussmenge oder den Durchfluss des Kaltwassers, Mischwassers oder Warmwassers im ersten Drehbereich β' und im zweiten Drehsektor 74' des zweiten Drehbereichs δ' einzustellen. Mit anderen Worten kann mit der beschriebenen Mischerpatrone 36, falls diese in der Einhebelmischarmatur 10 eingebaut ist, der Durchfluss sowohl im Gebrauch im ersten Einstellbereich β, durch die erste Mischwasserabflussöffnung 44, als auch der Durchfluss im Gebrauch im zweiten Einstellbereich δ durch die zweite Mischwasserabflussöffnung 46 und somit durch den Durchlauferhitzer 30, eingestellt werden.

Weiter kann bei der Einhebelmischarmatur 10 mit der im Zusammenhang mit den Figuren 6 bis 10 und den Figuren 11 bis 15 beschrieben Ausführungsformen der Mischerpatrone 36, bei Bedarf, der Bedienhebel 18 einfach in Drehrichtung D weitergedreht werden um eine wärmere Wassertemperatur des Warmwassers als diejenige aus der Warmwasserversorgung zu erhalten, wie dies bereits beschrieben wurde.

Es ist auch denkbar, im zweiten Einstellbereich S, zum Beispiel mittels einer Kulisse die Schwenklage des Bedienhebels 18 und somit des Steuerschafts 62 auf eine konstante Durchflussmenge zu blockieren, welche vorzugsweise kleiner ist als die maximale Durchflussmenge.

Der Vollständigkeit halber sei erwähnt, dass, insbesondere für die Drehbewegung, eine Übersetzung, beispielsweise ein Zahnradgetriebe, zwischen dem Bedienhebel 18 und dem Steuerschaft 62 angeordnet sein kann.

## Patentansprüche

1. Einhebelmischarmatur mit einem Armaturengehäuse (12), einer im Armaturengehäuse (12) eingesetzten, mittels eines Bedienhebels (18) steuerbaren Mischerpatrone (36) mit einer Warmwasserzuflussöffnung (42), an die eine Warmwasserleitung (24) anschliessbar ist, einer Kaltwasserzuflussöffnung (40), an die eine Kaltwasserleitung (22) anschliessbar ist, einer, mit einem Wasserauslauf (14) strömungsverbundenen, ersten Mischwasserabflussöffnung (44) und einer zweiten Mischwasserabflussöffnung (46), wobei durch Drehen des Bedienhebels (18) um eine Drehachse (K), ausgehend von einer Ruhestellung (64) in Richtung eines ersten Einstellbereichs (β), zuerst Kaltwasser von der Kaltwasserleitung (22) und anschliessend Mischwasser von der Kaltwasserleitung (22) und der Warmwasserleitung (24) aus der ersten Mischwasserabflussöffnung (44) in den Wasserauslauf (14) fliesst und dort austritt, **dadurch gekennzeichnet, dass** durch weiteres Drehen des Bedienhebels (18) um die Drehachse (K) in gleicher Richtung, in einem zweiten Einstellbereich (δ), Mischwasser von der Kaltwasserleitung (22) und der Warmwasserleitung (24) aus der zweiten Mischwasserabflussöffnung (46) austritt, die zweite Mischwasserabflussöffnung (46) mit einem Einlass (28) eines Durchlauferhitzers (30) sowie ein Auslass (32) des Durchlauferhitzers (30) mit dem Wasserauslauf (14) strömungsverbunden ist und das von der zweiten Mischwasserabflussöffnung (46) zugeführte Mischwasser im Durchlauferhitzer (30) erwärmt wird.

2. Einhebelmischarmatur gemäss Anspruch 1, **dadurch gekennzeichnet, dass** der Durchlauferhitzer (30) eine an den jeweiligen Durchfluss angepasste Heizleistung aufweist.

3. Einhebelmischarmatur gemäss Anspruch 1 oder 2, **dadurch gekennzeichnet, dass** der Durchlauferhitzer (30), das von der zweiten Mischwasserabflussöffnung (46) zugeführte Mischwasser um 8°C bis 20°C, vorzugsweise um 10°C bis 12°C, erwärmt.

4. Einhebelmischarmatur gemäss einem der Ansprüche 1 bis 3, **dadurch gekennzeichnet, dass** im ersten Einstellbereich (β) und, vorzugsweise im zweiten Einstellbereich (δ), durch Schwenken des Bedienhebels (18) um eine Schwenkachse (S), die vorzugsweise rechtwinklig zur Drehachse (K) verläuft, der Durchfluss von Null bis zu einem Maximalwert, beispielsweise 12 1/min, regulierbar ist.

5. Einhebelmischarmatur gemäss Anspruch 4, **dadurch gekennzeichnet, dass** die Wassertemperatur des durch den Wasserauslauf (14) austretenden Wassers beim Drehen des Bedienhebels (18), ausgehend von der Ruhestellung (64), im ersten und bis zu einem Ende des zweiten Einstellbereichs (δ), vorzugsweise kontinuierlich, zunimmt.

6. Einhebelmischarmatur gemäss einem der Ansprüche 1 bis 5, **dadurch gekennzeichnet, dass** das Armaturengehäuse (13) einen Aufnahmeraum (37) aufweist, der durch einen Zwischenboden (38) begrenzt und in dem die Mischerpatrone (36) angeordnet ist, wobei der Zwischenboden (38) vier Durchlässe, einen Kaltwasserdurchlass (48), der mit der Kaltwasserzuflussöffnung (40) strömungsverbunden und an den die Kaltwasserleitung (22) anschliessbar ist, einen Warmwasserdurchlass (50), der mit der Warmwasserzuflussöffnung (42) strömungsverbunden und an den die Warmwasserleitung (24) anschliessbar ist, einen ersten Mischwasserdurchlass (52), der mit der ersten Mischwasserabflussöffnung (44) und dem Wasserauslauf (14) ströumungsverbunden ist, und einen zweiten Mischwasserdurchlass (56), der mit der zweiten Mischwasserabflussöffnung (46) ströumungsverbunden und an den eine zum Einlass (28) des Durchlauferhitzers (30) führende Mischwasserabflussleitung (26) angeschlossen ist, aufweist.

7. Einhebelmischarmatur gemäss Anspruch 6, **dadurch gekennzeichnet, dass** das Armaturengehäuse (12) ein Innen- (39) und ein Aussengehäuse (12) aufweist, wobei der Aufnahmeraum (37) sowie der Zwischenboden (38) am Innengehäuse (39) ausgebildet sind und der Wasserauslauf (14) am Aussengehäuse (12) angeordnet ist.

8. Einhebelmischarmatur gemäss einem der Ansprüche 6 oder 7, **dadurch gekennzeichnet, dass** der erste Mischwasserdurchlass (52) einen Durchlassabschnitt (58) aufweist, der in einen, durch das Innengehäuse (39) und das Aussengehäuse (12) begrenzten Ringraum (54) mündet, welcher mit dem Wasserauslauf (14) strömungsverbunden ist.

9. Einhebelmischarmatur gemäss einem der Ansprüche 1 bis 8, **dadurch gekennzeichnet, dass** der Wasserauslauf (14) durch eine Ausziehbrause (80) gebildet ist und diese über einen Brauseschlauch (86) mit dem Auslass (32) des Durchlauferhitzers (30) und mit der ersten Mischwasserabflussöffnung (44) strömungsverbunden ist.

10. Einhebelmischarmatur gemäss Anspruch 9, **gekennzeichnet durch** ein T-Stück (82), das mit der ersten Mischwasserabflussöffnung (44), mit dem Auslass (32) des Durchlauferhitzers (30) und, über den Brauseschlauch (86), mit der Ausziehbrause (80) strömungsverbunden ist.

11. Einhebelmischarmatur gemäss Anspruch 10 **gekennzeichnet durch** ein Rückschlagventil (88), das ein Wasserfluss vom Durchlauferhitzer (30) in Richtung der Ausziehbrause (80) erlaubt, jedoch ein Wasserfluss von der ersten Mischwasserabflussöffnung (44) und dem Brauseschlauch (86) in Richtung des Durchlauferhitzers (30) verhindert.

12. Mischerpatrone (36) zum Einbau in eine Einhebelmischarmatur (10) gemäss einem der vorhergehenden Ansprüche, **gekennzeichnet,**
- **durch** eine feststehende Scheibe (90) mit einer zur Drehachse (K) konzentrisch angeordneten, ersten Mischwasserabflussöffnung (44'), einer, in einem Radialabstand (R) zur Drehachse (K) angeordneten, insbesondere in Umfangsrichtung langlochartig ausgebildeten, zweiten Mischwasserabflussöffnung (46') und je einer, in dem Radialabstand zur Drehachse angeordneten Kaltwasser- (40') und Warmwasserzuflussöffnung (42');
- **durch** eine an die feststehende Scheibe (90) anliegende, um die Drehachse (K) drehbare Steuerscheibe (94) mit einem mit der ersten Mischwasserabflussöffnung (44') verbundenen Kanal (96), der bezüglich der Drehachse (K) in radialer Richtung verläuft, wobei dieser durch drehen der Scheibe (94) mittels eines mit einem Bedienhebel (18) verbindbaren Steuerschafts (62), ausgehend von einer Ruhestellung (64), in einer Drehrichtung (D), in einem ersten Drehbereich (β'), zuerst mit der Kaltwasserzuflussöffnung (40'), anschliessend zusätzlich mit der Warmwasserzuflussöffnung (42') und schlussendlich nur mit der Warmwasserzuflussöffnung (42') strömungsverbind-bar ist;
- **durch** zwei in der Steuerscheibe (94), in einer Radialdistanz (Z) zur Drehachse (K) angeordnete und in Umfangsrichtung voneinander beabstandete Bogendurchlässe (98, 98'), die durch einen in Richtung der feststehenden Scheibe (90) geschlossenen Verbindungskanal (100) strömungsverbunden sind;
- wobei beim weiteren Drehen in Drehrichtung (D) des Steuerschafts (62) und somit der Steuerscheibe (94), aus dem ersten Drehbereich (β') hinaus und dann in einem zweiten Drehbereich (δ'), zu Beginn der Kanal (96) ausser Verbindung mit der Kalt- (40') und der Warmwasserzuflussöffnung (42') stehen sowie die Bogendurchlässe (98, 98') ausser Verbindung mit der Kalt- (40') und der Warmwasserzuflussöffnung (42') stehen und anschliessend der eine der Bogendurchlässe (98') mit der Kalt- (40') und Warmwasserzuflussöffnung (42') und der andere der Bogendurchlässe (98) mit der zweiten Mischwasserabflussöffnung (46') strömungsver-bindbar ist.

13. Mischerpatrone gemäss Anspruch 12, **dadurch gekennzeichnet, dass** in einem Endbereich des zweiten Drehbereichs (δ') der eine der Bogendurchlässe (98') ausschliesslich mit der Warmwasserzuflussöffnung (42') und der andere der Bogendurchlässe (98) mit der zweiten Mischwasserabflussöffnung (46') strömungsverbindbar ist.

14. Mischerpatrone gemäss Anspruch 12 oder 13, **dadurch gekennzeichnet, dass**
- durch Schwenken des Steuerschafts (62) um eine zur Drehachse (K) rechtwinklig verlaufende Schwenkachse (S) und daher durch Verschieben der Steuerscheibe (94') bezüglich der feststehenden Scheibe (90') in radialer Richtung, ausgehend von einer Einschaltstellung in eine Ausschaltstellung, der Kanal (96) beziehungsweise die beiden Bogendurchlässe (98, 98') ausser Verbindung mit der Kalt- (40') und der Warmwassserzuflussöffnung (42') gebracht werden;
- durch Schwenken in entgegengesetzter Richtung -in Abhängigkeit von der Drehlage - der Kanal (96) mit der Kalt- (40') und/oder Warmwasserzuflussöffnung (42') beziehungsweise der betreffende Bogendurchlass (98') mit der Kalt- (40') und der Warmwasserzuflussöffnung (42') oder nur mit der Warmwasserzuflussöffnung (42')und der andere Bogendurchlass (98) mit der zweiten Mischwasserabflussöffnung (46') verbind-bar ist.

15. Mischerpatrone gemäss einem der Ansprüche 12 bis 14, **dadurch gekennzeichnet, dass** die feststehende Scheibe (90, 90')) und die Steuerscheibe (94, 94') aus Keramik hergestellt sind.

16. Mischerpatrone gemäss einem der Ansprüche 12 bis 15, **dadurch gekennzeichnet, dass** der Radialabstand (R) kleiner ist als die Radialdistanz (Z).

## Claims

1. Single lever mixer fitting with a fitting housing (12), a mixer cartridge (36) which is inserted in the fitting housing (12), is controllable by means of an operating lever (18) and has a hot water inflow opening (42) to which a hot water pipe (24) can be connected, a cold water inflow opening (40) to which a cold water pipe (22) can be connected, a first mixed water outflow opening (44) which is connected in terms of flow to a water outlet (14), and a second mixed water outflow opening (46), wherein, by rotation of the operating lever (18) about an axis of rotation (K), from an inoperative position (64) in the direction of a first adjustment range (β), first of all cold water from the cold water pipe (22) and subsequently mixed water from the cold water pipe (22) and the hot water pipe (24) flow out of the first mixed water outflow opening (44) into the water outlet (14) and exit therefrom, **characterized in that**, by further rotation of the operating lever (18) in the same direction about the axis of rotation (K), in a second adjustment range (δ), mixed water from the cold water pipe (22) and the hot water pipe (24) exits from the second mixed water outflow opening (46), the second mixed water outflow opening (46) is connected in terms of flow to an inlet (28) of an instantaneous water heater (30), and also an outlet (32) of the instantaneous water heater (30) is connected in terms of flow to the water outlet (14), and the mixed water supplied by the second mixed water outflow opening (46) is heated in the instantaneous water heater (30).

2. Single lever mixer fitting according to Claim 1, **characterized in that** the instantaneous water heater (30) has a heating capacity matched to the respective volumetric flow rate.

3. Single lever mixer fitting according to Claim 1 or 2, **characterized in that** the instantaneous water heater (30) heats the mixed water supplied by the second mixed water outflow opening (46) by 8°C to 20°C, preferably by 10°C to 12°C.

4. Single lever mixer fitting according to one of Claims 1 to 3, **characterized in that** in the first adjustment range (β) and, preferably, in the second adjustment range (δ), by pivoting of the operating lever (18) about a pivot axis (S) which preferably runs at a right angle to the axis of rotation (K), the volumetric flow rate is adjustable from zero up to a maximum value, for example 12 1/min.

5. Single lever mixer fitting according to Claim 4, **characterized in that** when the operating lever (18) is rotated from the inoperative position (64), the water temperature of the water emerging through the water outlet (14) increases, preferably continuously, in the first adjustment range and up to an end of the second adjustment range (δ).

6. Single lever mixer fitting according to one of Claims 1 to 5, **characterized in that** the fitting housing (12) has a receiving space (37) which is bounded by an intermediate bottom (38) and in which the mixer cartridge (36) is arranged, wherein the intermediate bottom (38) has four passages, a cold water passage (48) which is connected in terms of flow to the cold water inflow opening (40) and to which the cold water pipe (22) can be connected, a hot water passage (50) which is connected in terms of flow to the hot water inflow opening (42) and to which the hot water pipe (24) can be connected, a first mixed water passage (52) which is connected in terms of flow to the first mixed water outflow opening (44) and to the water outlet (14), and a second mixed water passage (56) which is connected in terms of flow to the second mixed water outflow opening (46) and to which a mixed water outflow pipe (26) leading to the inlet (28) of the instantaneous water heater (30) is connected.

7. Single lever mixer fitting according to Claim 6, **characterized in that** the fitting housing (12) has an inner housing (39) and an outer housing (12), wherein the receiving space (37) and the intermediate bottom (38) are formed on the inner housing (39) and the water outlet (14) is arranged on the outer housing (12).

8. Single lever mixer fitting according to either of Claims 6 and 7, **characterized in that** the first mixed water passage (52) has a passage section (58) which opens into an annular space (54) which is bounded by the inner housing (39) and the outer housing (12) and is connected in terms of flow to the water outlet (14).

9. Single lever mixer fitting according to one of Claims 1 to 8, **characterized in that** the water outlet (14) is formed by an extendable shower (80) and the latter is connected in terms of flow via a shower hose (86) to the outlet (32) of the instantaneous water heater (30) and to the first mixed water outflow opening (44).

10. Single lever mixer fitting according to Claim 9, **characterized by** a T piece (82) which is connected in terms of flow to the first mixed water outflow opening (44), to the outlet (32) of the instantaneous water heater (30) and, via the shower hose (86), to the extendable shower (80).

11. Single lever mixer fitting according to Claim 10, **characterized by** a non-return valve (88) which permits a flow of water from the instantaneous water heater (30) in the direction of the extendable shower (80), but prevents a flow of water from the first mixed water outflow opening (44) and the shower hose (86) in the direction of the instantaneous water heater (30).

12. Mixer cartridge (36) for fitting into a single lever mixer fitting (10) according to one of the preceding claims, **characterized**
- **by** a fixed disc (90) with a first mixed water outflow opening (44') which is arranged concentrically with respect to the axis of rotation (K), a second mixed water outflow opening (46') which is arranged at a radial distance (R) from the axis of rotation (K) and in particular is formed in the manner of an elongated hole in the circumferential direction, and a cold water inflow opening (40') and a hot water inflow opening (42'), which are arranged at the radial distance from the axis of rotation;
- by a control disc (94) which bears against the fixed disc (90), is rotatable about the axis of rotation (K) and has a channel (96) which is connected to the first mixed water outflow opening (44') and runs in the radial direction with respect to the axis of rotation (K), wherein, by rotation of the disc (94) by means of a control shaft (62), which is connectable to an operating lever (18), from an inoperative position (64) in a direction of rotation (D), said channel, in a first rotational range (β'), is connectable in terms of flow first of all to the cold water inflow opening (40'), subsequently additionally to the hot water inflow opening (42') and finally only to the hot water inflow opening (42');
- by two curved passages (98, 98') which are arranged in the control disc (94) at a radial distance (Z) from the axis of rotation (K) and are spaced apart from each other in the circumferential direction and are connected in terms of flow by a connecting channel (100) which is closed in the direction of the fixed disc (90) ;
- wherein, on further rotation in the direction of rotation (D) of the control shaft (62) and therefore of the control disc (94), beyond the first rotational range (β') and then in a second rotational range (δ'), at the beginning the channel (96) is not connected to the cold water inflow opening (40') and to the hot water inflow opening (42'), and the curved passages (98, 98') are not connected to the cold water inflow opening (40') and to the hot water inflow opening (42'), and subsequently one of the curved passages (98') is connectable in terms of flow to the cold water inflow opening (40') and to the hot water inflow opening (42') and the other of the curved passages (98) is connectable in terms of flow to the second mixed water outflow opening (46').

13. Mixer cartridge according to Claim 12, **characterized in that**, in an end region of the second rotational range (δ'), one of the curved passages (98') is connectable in terms of flow exclusively to the hot water inflow opening (42') and the other of the curved passages (98) is connectable in terms of flow to the second mixed water outflow opening (46').

14. Mixer cartridge according to Claim 12 or 13, **characterized in that**
- by pivoting of the control shaft (62) about a pivot axis (S) running at a right angle to the axis of rotation (K) and therefore by displacement of the control disc (94') in the radial direction with respect to the fixed disc (90'), from a switching-on position into a switching-off position, the channel (96) and the two curved passages (98, 98') are brought out of connection with the cold water inflow opening (40') and the hot water inflow opening (42');
- by pivoting in the opposite direction depending on the rotational position - the channel (96) is connectable to the cold water inflow opening (40') and/or the hot water inflow opening (42'), and the relevant curved passage (98') is connectable to the cold water inflow opening (40') and to the hot water inflow opening (42') or only to the hot water inflow opening (42'), and the other curved passage (98) is connectable to the second mixed water outflow opening (46').

15. Mixer cartridge according to one of Claims 12 to 14, **characterized in that** the fixed disc (90, 90') and the control disc (94, 94') are produced from ceramic.

16. Mixer cartridge according to one of Claims 12 to 15, **characterized in that** the radial distance (R) is smaller than the radial distance (Z).

## Revendications

1. Mitigeur monocommande avec un corps d'armature (12), une cartouche de mitigeur (36) introduite dans le corps d'armature (12) et pouvant être commandée au moyen d'un levier de commande (18), présentant un orifice d'arrivée d'eau chaude (42) auquel une conduite d'eau chaude (24) peut être raccordée, un orifice d'arrivée d'eau froide (40) auquel une conduite d'eau froide (22) peut être raccordée, avec un premier orifice d'écoulement d'eau mélangée (44) en communication d'écoulement avec une sortie d'eau (14) et un deuxième orifice d'écoulement d'eau mélangée (46), dans lequel, par la rotation du levier de commande (18) autour d'un axe de rotation (K), depuis une position de repos (64) en direction d'une première zone de réglage (β), il coule d'abord de l'eau froide provenant de la conduite d'eau froide (22) et ensuite de l'eau mélangée provenant de la conduite d'eau froide (22) et de la conduite d'eau chaude (24) depuis le premier orifice d'écoulement d'eau mélangée (44) dans la sortie d'eau (14) et elle sort de celle-ci, **caractérisé en ce que**, par une rotation supplémentaire du levier de commande (18) autour de l'axe de rotation (K) dans la même direction, dans une deuxième zone de réglage (δ), de l'eau mélangée provenant de la conduite d'eau froide (22) et de la conduite d'eau chaude (24) sort du deuxième orifice d'écoulement d'eau mélangée (46), le deuxième orifice d'écoulement d'eau mélangée (46) est raccordé en écoulement à une entrée (28) d'un réchauffeur continu (30) et une sortie (32) du réchauffeur continu (30) est raccordée en écoulement à la sortie d'eau (14) et l'eau mélangée fournie par le deuxième orifice d'écoulement d'eau mélangée (46) est chauffée dans le réchauffeur continu (30).

2. Mitigeur monocommande selon la revendication 1, **caractérisé en ce que** le réchauffeur continu (30) présente une puissance de chauffage adaptée au débit respectif.

3. Mitigeur monocommande selon la revendication 1 ou 2, **caractérisé en ce que** le réchauffeur continu (30) chauffe l'eau mélangée, qui est fournie par le deuxième orifice d'écoulement d'eau mélangée (46), de 8°C à 20°C, de préférence de 10°C à 12°C.

4. Mitigeur monocommande selon l'une quelconque des revendications 1 à 3, **caractérisé en ce que**, dans la première zone de réglage (β) et de préférence dans la deuxième zone de réglage (δ), par pivotement du levier de commande (18) autour d'un axe de pivotement (S), qui est de préférence perpendiculaire à l'axe de rotation (K), le débit peut être réglé de zéro à une valeur maximale, par exemple 12 1/min.

5. Mitigeur monocommande selon la revendication 4, **caractérisé en ce que** la température d'eau de l'eau sortant par la sortie d'eau (14) lors de la rotation du levier de commande (18), depuis la position de repos (64), augmente, de préférence en continu, dans la première et jusqu'à une extrémité de la deuxième zone de réglage (δ).

6. Mitigeur monocommande selon l'une quelconque des revendications 1 à 5, **caractérisé en ce que** le corps d'armature (12) présente une chambre de réception (37), qui est limitée par un fond intermédiaire (38) et dans laquelle la cartouche de mitigeur (36) est disposée, dans lequel le fond intermédiaire (38) présente quatre passages, un passage d'eau froide (48) qui est raccordé en écoulement à l'orifice d'arrivée d'eau froide (40) et auquel la conduite d'eau froide (22) peut être raccordée, un passage d'eau chaude (50), qui est raccordé en écoulement à l'orifice d'arrivée d'eau chaude (42) et auquel la conduite d'eau chaude (24) peut être raccordée, un premier passage d'eau mélangée (52) qui est raccordé en écoulement au premier orifice d'écoulement d'eau mélangée (44) et à la sortie d'eau (14), et un deuxième passage d'eau mélangée (56), qui est raccordé en écoulement au deuxième orifice d'écoulement d'eau mélangée (46) et auquel une conduite d'écoulement d'eau mélangée (26) conduisant à l'entrée (28) du réchauffeur continu (30) est raccordée.

7. Mitigeur monocommande selon la revendication 6, **caractérisé en ce que** le corps d'armature (12) présente un corps intérieur (39) et un corps extérieur (12), dans lequel la chambre de réception (37) ainsi que le fond intermédiaire (38) sont formés sur le corps intérieur (39) et la sortie d'eau (14) est disposée sur le corps extérieur (12).

8. Mitigeur monocommande selon l'une des revendications 6 ou 7, **caractérisé en ce que** le premier passage d'eau mélangée (52) présente une partie de passage (58), qui débouche dans une chambre annulaire (54) délimitée par le corps intérieur (39) et le corps extérieur (12), et qui est raccordée en écoulement à la sortie d'eau (14).

9. Mitigeur monocommande selon l'une quelconque des revendications 1 à 8, **caractérisé en ce que** la sortie d'eau (14) est formée par une douchette extensible (80) et celle-ci est raccordée en écoulement par un tuyau de douchette (86) à la sortie (32) du réchauffeur continu (30) et au premier orifice d'écoulement d'eau mélangée (44).

10. Mitigeur monocommande selon la revendication 9, **caractérisé par** une pièce en T (82), qui est raccordée en écoulement au premier orifice d'écoulement d'eau mélangée (44), à la sortie (32) du réchauffeur continu (30) et, par l'intermédiaire du tuyau de douchette (86), à la douchette extensible (80).

11. Mitigeur monocommande selon la revendication 10, **caractérisé par** une soupape anti-retour (88), qui permet un écoulement d'eau du réchauffeur continu (30) en direction de la douchette extensible (80), mais qui empêche un écoulement d'eau du premier orifice d'écoulement d'eau mélangée (44) et du tuyau de douchette (86) en direction du réchauffeur continu (30).

12. Cartouche de mitigeur (36) à monter dans un mitigeur monocommande (10) selon l'une quelconque des revendications précédentes, **caractérisée**
- **par** un disque fixe (90) avec un premier orifice d'écoulement d'eau mélangée (44') disposé de façon concentrique à l'axe de rotation (K), un deuxième orifice d'écoulement d'eau mélangée (46') disposé à une distance radiale (R) de l'axe de rotation (K), en particulier en forme de trou oblong en direction périphérique, et respectivement d'un orifice d'écoulement d'eau froide (40') et d'un orifice d'écoulement d'eau chaude (42') disposés à la distance radiale de l'axe de rotation;
- par un disque de commande (94) s'appliquant sur le disque fixe (90) et pouvant tourner autour de l'axe de rotation (K), avec un canal (96) raccordé au premier orifice d'écoulement d'eau mélangée (44'), canal qui s'étend en direction radiale par rapport à l'axe de rotation (K), dans lequel celui-ci peut être raccordé en écoulement, par rotation du disque (94) au moyen d'un arbre de commande (62) pouvant être relié au levier de commande (18), depuis une position de repos (64), dans une direction de rotation (D), dans une première zone de rotation (β'), d'abord à l'orifice d'arrivée d'eau froide (40'), ensuite en plus à l'orifice d'arrivée d'eau chaude (42') et enfin uniquement à l'orifice d'arrivée d'eau chaude (42');
- par deux passages courbes (98, 98') disposés dans le disque de commande (94) à une distance radiale (Z) de l'axe de rotation (K) et espacés l'un de l'autre en direction périphérique, qui sont raccordés en écoulement par un canal de raccordement (100) fermé en direction du disque fixe (90);
- dans laquelle, lors d'une rotation supplémentaire de l'arbre de commande (62) et dès lors du disque de commande (94) dans la direction de rotation (D), depuis la première zone de rotation (β') et ensuite dans une deuxième zone de rotation (δ'), au début le canal (96) se trouve hors raccordement à l'orifice d'arrivée d'eau froide (40') et à l'orifice d'arrivée d'eau chaude (42') et les passages courbes (98, 98') se trouvent hors raccordement à l'orifice d'arrivée d'eau froide (40') et à l'orifice d'arrivée d'eau chaude (42') et ensuite l'un des passages courbes (98') peut être raccordé en écoulement à l'orifice d'arrivée d'eau froide (40') et à l'orifice d'arrivée d'eau chaude (42') et l'autre des passages courbes (98) peut être raccordé en écoulement au deuxième orifice d'écoulement d'eau mélangée (46').

13. Cartouche de mitigeur selon la revendication 12, **caractérisée en ce que**, dans une région finale de la deuxième zone de rotation (δ'), l'un des passages courbes (98') peut être raccordé en écoulement exclusivement à l'orifice d'arrivée d'eau chaude (42') et l'autre des passages courbes (98) peut être raccordé en écoulement au deuxième orifice d'écoulement d'eau mélangée (46').

14. Cartouche de mitigeur selon la revendication 12 ou 13, **caractérisée en ce que**
- par pivotement de l'arbre de commande (62) autour d'un axe de pivotement (S) s'étendant perpendiculairement à l'axe de rotation (K) et dès lors par déplacement du disque de commande (94') par rapport au disque fixe (90') en direction radiale, depuis une position de connexion jusqu'à une position de déconnexion, le canal (96) respectivement les deux passages courbes (98, 98') sont amenés hors de raccordement avec l'orifice d'arrivée d'eau froide (40') et l'orifice d'arrivée d'eau chaude (42');
- par pivotement dans la direction opposée - en fonction de la position de rotation - le canal (96) peut être raccordé en écoulement à l'orifice d'arrivée d'eau froide (40') et/ou à l'orifice d'arrivée d'eau chaude (42'), respectivement le passage courbe concerné (98') peut être raccordé en écoulement à l'orifice d'arrivée d'eau froide (40') et à l'orifice d'arrivée d'eau chaude (42') ou uniquement à l'orifice d'arrivée d'eau chaude (42') et l'autre passage courbe (98) peut être raccordé en écoulement au deuxième orifice d'écoulement d'eau mélangée (46').

15. Cartouche de mitigeur selon l'une quelconque des revendications 12 à 14, **caractérisée en ce que** le disque fixe (90, 90') et le disque de commande (94, 94') sont fabriqués en céramique.

16. Cartouche de mitigeur selon l'une quelconque des revendications 12 à 15, **caractérisée en ce que** la distance radiale (R) est inférieure à la distance radiale (Z).
